# EUROPÄISCHE PATENTSCHRIFT

(11) **EP 1 711 294 B1**
(45) Veröffentlichungstag und Bekanntmachung des Hinweises auf die Patenterteilung: **21.05.2014**
(21) Anmeldenummer: 05706175.6
(22) Anmeldetag: 27.01.2005
(51) Int. Cl.: B23B 51/04, B23B 41/02

(54) **Bohrer**
Drill
Foret

(30) Priorität: 02.02.2004 AT 1422004
(43) Veröffentlichungstag der Anmeldung: 18.10.2006
(60) Teilanmeldung: 14152987.5
(73) Patentinhaber: SCHOELLER-BLECKMANN Oilfield Technology GmbH, 2630 Ternitz (AT)
(72) Erfinder: RADKOWITSCH, Wolfgang, A-2620 Neunkirchen (AT); METZNER, Klaus, A-2700 Wiener Neustadt (AT); BLEICHER, Friedrich, A-1140 Wien (AT)
(74) Vertreter: Ofner, Clemens
(86) Internationale Anmeldenummer: PCT/AT2005/000021
(87) Internationale Veröffentlichungsnummer: WO 2005/072897

(56) Entgegenhaltungen:
- EP-A- 0 491 670
- EP-A- 0 768 136
- EP-A- 0 838 304
- EP-A- 1 291 104
- EP-A- 1 428 601
- WO-A-01/64365
- DE-A1- 1 949 248
- DE-A1- 3 314 718
- DE-A1- 3 705 852
- DE-A1- 3 720 837
- DE-A1- 4 115 512
- DE-A1- 4 312 937
- DE-A1- 4 430 331
- DE-A1- 10 229 134
- DE-U1- 9 422 389
- FR-A- 1 369 076
- FR-A- 2 287 679
- GB-A- 797 557
- GB-A- 1 415 137
- GB-A- 1 435 166
- US-A- 1 304 981
- US-A- 2 922 323
- US-A- 3 120 766
- US-A- 3 635 108
- US-A- 3 644 049
- US-A- 4 395 169
- US-A- 4 775 926
- US-A- 4 831 785
- US-A- 5 174 695
- US-A- 5 217 332
- US-A- 5 251 511
- US-A- 5 443 585
- US-A- 5 444 205
- US-A- 5 544 985
- US-A- 5 755 537
- US-B1- 6 586 862
- PETER ZELINSKI: "Deep Thinking" INTERNET ARTICLE, [Online] Juni 2003 (2003-06), Seiten 1-2, XP002326416 Gefunden im Internet: URL:http://www.mmsonline.com/articles/0603 03.html> [gefunden am 2005-04-27]
- PATENT ABSTRACTS OF JAPAN Bd. 012, Nr. 343 (M-741), 14. September 1988 (1988-09-14) & JP 63 102813 A (MITSUBISHI METAL CORP), 7. Mai 1988 (1988-05-07)
- PATENT ABSTRACTS OF JAPAN Bd. 008, Nr. 177 (M-317), 15. August 1984 (1984-08-15) & JP 59 069207 A (MITSUBISHI KINZOKU KK), 19. April 1984 (1984-04-19)
- XU W L ET AL: "PIEZOELECTRIC ACTUATOR BASED ACTIVE ERROR COMPENSATION OF PRECISIONMACHINING" MEASUREMENT SCIENCE AND TECHNOLOGY, IOP PUBLISHING, BRISTOL, GB, Bd. 10, Nr. 2, Februar 1999 (1999-02), Seiten 106-111, XP000893426 ISSN: 0957-0233
- PESTUNOV V M: "COMPENSATION OF ELASTIC DEFORMATION OF A MACHINE-TOOL MANUFACTURINGSYSTEM" RUSSIAN ENGINEERING RESEARCH, ALLERTON PRESS, NEW YORK, NY, US, Bd. 19, Nr. 4, 1999, Seiten 92-97, XP000935525 ISSN: 1068-798X

## Beschreibung

Die Erfindung betrifft eine Vorrichtung zum Bohren von tiefen Bohrlöchern in Werkstücken und einen Bohrer für eine derartige Vorrichtung, entsprechend den Oberbegriffen der Ansprüche 1, 26 und 50. Ein solcher Bohrer ist aus DE 33 14 718 A1 bekannt.

Von Tiefbohren wird bereits ab einem Verhältnis von Lochtiefe zu Durchmesser gleich oder größer 5 bis 10 gesprochen. Verfahrenstechnisch sehr hohe Anforderungen sind bei Lochtiefen zu Durchmesserverhältnissen ab etwa 100 zu bewältigen. Bei Lochtiefen zu Durchmesserverhältnissen dieser Größenordnung wird es immer schwieriger einen geraden, räumlichen Längsverlauf des Bohrlochs sicherzustellen. Als wirtschaftlich vorteilhafte Methode für das Tiefbohren erweist sich die Verwendung sogenannter Einlippenbohrer.

Ein derartiger Einlippenbohrer ist beispielsweise aus der DE 36 29 033 C2 bekannt. Darin wird ein Einlippen-Vollbohrer mit einem Kühlmittelzuführkanal und einem eine Schneidplatte tragenden Bohrkopf beschrieben. Der Bohrkopf aus einem massiven Hartmetall ist an einem Bohrerschaft befestigt, wobei die Kühlmittelzuführbohrung durch eine gemeinsame axial ausgerichtete Bohrung in dem Bohrerschaft als auch dem Bohrkopf gebildet ist. Der Bohrschaft verfügt über eine V-förmige Spanabführnut bzw. Sicke.

Aus dem Dokument DE 44 30 331 A1 ist ein Verfahren und eine Vorrichtung zur Beeinflussung des Verlaufs von Tieflochbohrungen bekannt. Die Beeinflussung des räumlichen Längsverlaufs des Bohrlochs erfolgt dabei dadurch, dass in den Spalt zwischen der Bohrung und der Bohrstange bzw. dem Bohrschaft ein Druckstück eingebracht wird, durch das der Bohrschaft gezielt in eine Richtung verbogen wird und damit dem Bohrkopf eine gewünschte Richtung aufgezwungen wird. Damit soll es möglich sein, eine bereits verlaufende Bohrung in die gewünschte Richtung zurückzubringen bzw. einen Verlauf in seiner Entstehung zu unterdrücken.

Die Aufgabe der Erfindung ist es eine Vorrichtung zum Bohren von tiefen Löchern anzugeben, durch das die Effizienz der Beeinflussung des räumlichen Längsverlaufes des Bohrlochs verbessert werden kann. Eine weitere Aufgabe der Erfindung ist es eine Vorrichtung anzugeben, durch das die Beeinflussung des räumlichen Längsverlaufs des Bohrlochs weitestgehend automatisiert durchgeführt werden kann.

Die Aufgabe der Erfindung wird durch den Bohrer entsprechend den Merkmalen des Anspruchs 1 gelöst. Von Vorteil ist dabei, dass die seitliche Rückversetzung an dem Bohrkopf des Bohrers zur Ausbildung eines Volumens zwischen dem entsprechenden Oberflächenbereich des Bohrkopfs und der Seitenwand der Bohrung, in die der Bohrer eingeführt ist, zur Verfügung steht. Bohrfluid, dass in den Bereich des Bohrkopfs während des Bohrens herangeführt wird, füllt dieses Volumen aus und bildet einen Druckpolster, der als Reaktionskraft eine seitliche Radialkraft auf den Bohrkopf ausübt. Der erfindungsgemäße Bohrer bietet somit den Vorteil, dass auf den Bohrkopf gezielt eine Radialkraft ausgeübt werden kann und so die räumliche Richtung des Längsverlaufs des Bohrlochs beeinflusst werden kann.

Gemäß der Erfindung ist vorgesehen, dass eine Flächennormale der Rückversetzung mit der Winkelhalbierenden der V-förmigen Spanabführungsnut bzw. Sicke des Bohrers einen Winkel einschließt, der aus einem Bereich von - 50 ° bis + 50 °, bevorzugt aus einem Bereich von - 30 ° bis + 30 ° gewählt ist. Von Vorteil ist dabei, dass durch die Wahl dieses Winkels der Flächennormalen der Rückversetzung an dem Bohrkopf eine optimale Ausrichtung der Radialkraft zur Unterstützung der Kraft der Schneide auf das zu bearbeitende Werkstück erreicht werden kann.

Weiters ist vorgesehen, dass sich die Rückversetzung in einem der Bohrerspitze zugewandten Endbereich des Bohrkopfs befindet und sich in axialer Richtung erstreckt bzw. dass die Rückversetzung mit einer Breite ausgebildet ist, wobei das Verhältnis aus dem Durchmesser des Bohrkopfs und der Breite der Rückversetzung einen Wert aus einem Bereich von 0,1 bis 0,8 hat. Von Vorteil ist dabei, dass dadurch ein ausreichend großes Volumen zur Ausbildung des Druckpolsters des Bohrfluids mit einer ausreichend großen effektiven Querschnittsfläche zur Erzeugung der Radialkraft zur Verfügung steht. Die Weiterbildungen des Bohrers gemäß den Ansprüchen 9 bis 16 bieten den Vorteil, dass durch die dementsprechende Formgebung der Schneide des Bohrkopfs die seitliche Ablenkbarkeit durch Einwirkung einer Radialkraft auf den Bohrkopf besonders effektiv ist.

Die Ausbildung des Bohrers, wonach in einem durch die Rückversetzung gebildeten Oberflächenbereich des Bohrkopfs eine zweite Austrittsöffnung zum Ausströmen des Bohrfluids in den Bereich des Bohrkopfs angeordnet ist, bietet den Vorteil, dass dadurch die mit den pulsierenden Bohrfluidstrom eingeleitete Druckwelle direkt gegen die Seitenwand des Bohrers gerichtet ist und somit deren Wirkung begünstigt wird.

Durch die Ausbildung des Bohrers, wonach die Mündungsachse der Austrittsöffnung im Bereich der Rückversetzung gegenüber der Flächennormalen der Rückversetzung geneigt ist bzw. diese Neigung einen Wert aus einem Bereich von 0 ° bis 70 ° hat, wird der Vorteil erzielt, dass damit die durch das ausströmende Bohrfluid eingeleitete Druckwelle zu einer Reaktionskraft führt, durch die die Schneidenkraft unterstützt wird, d.h. die durch die Druckwelle eingeleitete Radialkraft und die Schneidenkraft haben annähernd die gleiche räumliche Richtung.

Gemäß einem weiteren Ausführungsbeispiel ist vorgesehen, dass neben der Austrittsöffnung im oberflächenbereich der Rückversetzung eine weitere Austrittsöffnung in einem durch die Sicke gebildeten Oberflächenbereich des Bohrkopfs angeordnet ist, wobei diese weitere Austrittsöffnung in einen von der Bohrerspitze des Bohrkopfs weiter entfernt gelegenen Bereich des Bohrkopfs angeordnet ist. Von Vorteil ist dabei, dass ein derartiger Bohrer die Möglichkeit der Einwirkung eines die Richtung der Drehachse verändernden Drehmoments bietet. Es steht somit bei diesem Bohrer eine zusätzliche eigenständige Form der Beeinflussung des Längsverlaufs des Bohrlochs zur Verfügung, d.h. neben der Einwirkung einer Radialkraft ist auch die Einwirkung eines Drehmoments auf den Bohrkopf möglich.

Gemäß einer alternativen Ausführungsform ist vorgesehen, dass im Bereich der Rückversetzung an den Bohrkopf ein piezoelektrisches Element angeordnet ist bzw., dass dieses piezoelektrische Element mit einer Anlageseite ausgebildet ist, wobei die Anlageseite mit der einhüllenden Zylindermantelfläche des Bohrkopfs fluchtend ausgebildet ist. Von Vorteil ist dabei, dass damit eine auf den Bohrkopf wirkende Radialkraft nur durch die Einleitung elektrischer Impulse erfolgen kann. Damit ist es auch möglich, umlaufsynchrone Radialkräfte bei sehr hohen Drehzahlen des Bohrers erzeugen zu können.

Weiters kann vorgesehen sein, dass der Bohrkopf des Bohrers ein elektromagnetische Strahlung emittierendes Element aufweist bzw. dass dieses Element durch ein Stück eines Gammastrahlung emittierenden chemischen Elements gebildet ist. Dies bietet den Vorteil, dass in Zusammenwirkung mit einem Strahldetektor der von der Außenseite an das Werkstück herangeführt wird, der Abstand von der Oberfläche des Werkstücks bzw. in der Folge der räumliche Verlauf des Bohrlochs gemessen werden kann. Vorteilhaft ist dabei insbesondere, dass diese Messung ohne Unterbrechung des Bohrvorgangs auch kontinuierlich erfolgen kann.

Die Aufgabe der Erfindung wird eigenständig auch durch eine Vorrichtung zum Bohren eines Bohrlochs in einem Werkstück, entsprechend den Merkmalen des Anspruchs 26, gelöst. Von Vorteil ist dabei, dass damit der für den Bohrprozess ohnehin erforderliche Bohrfluidkreislauf mit dem ein zur Kühlung bzw. Schmierung des Bohrers erforderliches Bohrfluid in das Bohrloch zugeführt wird, gleichzeitig auch dazu dienen kann, die Richtung des räumlichen Längsverlaufs des Bohrlochs zielgerichtet zu beeinflussen.

Von Vorteil ist auch die Weiterbildung der Vorrichtung zum Bohren eines Bohrlochs, wonach der Bohrfluidkreislauf eine Pulsleitung mit einem Ventil umfasst, wobei die Pulsleitung unmittelbar vor der Drehübergabe von der Zuführleitung für das Bohrfluid in den Bohrer abzweigt. Damit kann der zur Erzeugung der in einem gewünschten Rotationswinkelbereich wirkenden Radialkraft erforderliche, periodische, umlaufsynchrone Druckverlauf des Bohrfluids alleine durch kurzzeitiges Öffnen bzw. Schließen des Ventils in der Pulsleitung bewirkt werden. Neben der einen Pumpe zur Erzeugung des Bohrfluidstroms ist somit keine weitere Pumpe zur Erzeugung des pulsierenden Druckverlaufs erforderlich.

Weiters ist vorgesehen, dass in dem Bohrfluidkreislauf der Vorrichtung eine Filtereinrichtung mit einem Grobfilter bzw. mit einem Feinfilter für das Bohrfluid vorhanden ist. Dadurch wird die Reibung durch Schmutzpartikel, die mit dem Bohrfluid mittransportiert werden, an den Ventil- bzw. Steuerkanten des Ventils weitgehend vermieden und somit die Standzeit des Ventils deutlich erhöht.

Von Vorteil ist auch die Ausbildung der Vorrichtung, wonach die Zuführleitung bzw. die Pulsleitung des Bohrfluidkreislaufs durch Leitung mit einer hohen Stabilität gegenüber einer radialen bzw. gegenüber eine longidudinalen Dehnung ausgebildet sind. Dadurch werden unerwünschte Abschwächungen der Druckimpulse des periodischen Druckverlaufs des Bohrfluids als auch eine zu große Abflachung der ansteigenden bzw. abfallenden Flanken des Druckverlaufes vermieden.

Weiters ist vorgesehen, dass die Vorrichtung auch eine Messvorrichtung zur Messung des räumlichen Längsverlaufes des Bohrlochs umfasst. Diese erlaubt in vorteilhafter Weise, die Abstimmung der Radialkraft auf die jeweilige Position bzw. Abweichung des Bohrkopfs von dem gewünschten Längsverlauf des Bohrlochs.

Ebenso ist vorgesehen, dass die Vorrichtung zum Bohren des Bohrlochs eine Steuereinrichtung, die mit dem Drehgeber, mit der Messvorrichtung und mit dem Ventil verbunden ist, umfasst. Dies erlaubt dem Bohrprozess weitestgehend automatisiert durchführen zu können.

Gemäß einer Weiterbildung der Vorrichtung ist vorgesehen, dass diese auch ein Bohrleitrohr mit einer Bohrbuchse und einem Bohrbuchsenschaft umfasst, wobei in der Bohrbuchse ein exzentrisch angeordnetes Bohrerführungsloch ausgebildet ist bzw. dass das Bohrerführungsloch bezüglich der Längsmittelachse der Bohrbuchse schräg ausgerichtet ist. Mit diesem Bohrleitrohr steht eine weitere Möglichkeit der Einwirkung einer Radialkraft auf den Bohrer zur Verfügung, indem mit Hilfe des Bohrleitrohrs und eines weiteren Bohrers mit einem entsprechend kleineren Durchmesser der durch das Bohrführungsloch der Bohrbuchse geführt werden kann, eine sogenannte exzentrische Stichlochbohrung bzw. exzentrische Vorbohrung erzeugt werden kann. Beim anschließenden Fortsetzen des Bohrens mit dem ursprünglichen Bohrer mit dem Durchmesser D des Bohrlochs erfährt dieser Bohrer sodann beim Eindringen in das vorgebohrte Bohrloch aufgrund der exzentrischen Anordnung eine entsprechende Radialkraft.

Die Aufgabe der Erfindung wird eigenständig auch durch eine Vorrichtung, entsprechend den Merkmalen des Anspruches 50, gelöst. Von Vorteil ist dabei, dass die periodischen Druckimpulse zur Erzeugung der Radialkraft alleine durch die Einleitung elektrischer Impulse an das piezoelektrische Element erzeugt werden können.

Vorteilhafte Weiterbildungen dieser Vorrichtung sind auch durch die Ansprüche 51 bis 63 beschrieben.

Bei einem Verfahren zum Bohren von tiefen Bohrlöchern in Werkstücken mit einem Bohrer mit einem Bohrkopf von der Form eines Einlippenbohrers und mit einer seitlichen, V-förmigen Spanabführungsnut bzw. Sicke und mit einem Kanal mit einer Austrittsöffnung im Bohrkopf für die Zuführung eines Bohrfluids ist vorgesehen, dass bei dem Bohrkopf an einer der Sicke abgewandten Bohrerseite des Bohrkopfs zwischen einer ersten und einer zweiten Zylindermantelteilfläche des Bohrkopfs eine den Querschnitt des Bohrkopfs bezüglich einer einhüllenden Zylindermantelfläche des Bohrkopfs reduzierende Rückversetzung ausgebildet ist und auf den Bohrkopf eine periodisch über einen vorbestimmbaren Rotationswinkelbereich wirkende Radialkraft ausgeübt wird, wobei die Radialkraft durch einen Druckpolster erzeugt wird, der durch das, im Bereich eines, durch die Rückversetzung und eine Seitenwand des Bohrloches gebildeten Volumens befindliche Bohrfluid gebildet wird. Von Vorteil ist dabei, dass mit diesem Verfahren die Herstellung eines Bohrlochs mit einem gewünschten Längsverlauf möglich ist. Wird nämlich der Längsverlauf des Bohrlochs während des Bohrvorgangs gemessen, kann Richtung als auch Größe der einwirkenden Radialkraft derart gesteuert werden, dass ein möglichst geradlinig verlaufendes Bohrloch in dem Werkstück hergestellt werden kann. Andererseits ist es aber auch möglich, mit dem Verfahren ein Bohrloch mit einem gekrümmten, d.h. nicht geradlinigen räumlichen Längsverlauf herzustellen, indem während des Vordringens des Bohrers in das Werkstück Richtung und Größe der Radialkraft, die auf den Bohrkopf einwirkt, als auch der Winkelbereich bzw. der sogenannte Öffnungswinkel über den die Radialkraft zur Wirkung kommt entsprechend gesteuert werden.

Zum besseren Verständnis der Erfindung wird diese anhand der nachfolgenden Fig. näher erläutert.

Es zeigen in schematisch vereinfachter Darstellung:
- Fig. 1: eine Vorrichtung zum Bohren eines Tiefenbohrlochs in einem Werkstück;
- Fig. 2: eine Seitenansicht des Bohrers aus einer senkrecht bezüglich der Bohrerachse gerichteten Blickrichtung;
- Fig. 3: eine Draufsicht auf den Bohrkopf des Bohrers gemäß Fig. 2;
- Fig. 4: ein weiteres Ausführungsbeispiel des Bohrers mit einer zweiten Austrittsöffnung in Seitenansicht;
- Fig. 5: eine Draufsicht auf den Bohrkopfs des Bohrers gemäß Fig. 4;
- Fig. 6: ein weiteres Ausführungsbeispiel des Bohrers;
- Fig. 7: eine Seitenansicht des Bohrers gemäß Fig. 6;

- Fig. 8: ein Bohrleitrohr mit einem Bohrer zur Erzeugung einer exzentrischen Vorbohrung, perspektivisch dargestellt;
- Fig. 9: eine Bohrbuchse des Bohrleitrohrs gemäß Fig. 8, geschnitten dargestellt;
- Fig. 10: ein weiteres Ausführungsbeispiel der Bohrbuchse des Bohrleitrohrs gemäß Fig. 8;
- Fig. 11: ein weiteres Ausführungsbeispiel der Vorrichtung zum Bohren eines Bohrlochs in einem Werkstück;
- Fig. 12: einen Bohrer entsprechend dem Ausführungsbeispiel der Vorrichtung gemäß Fig. 11, in Draufsicht auf die Bohrerspitze dargestellt.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

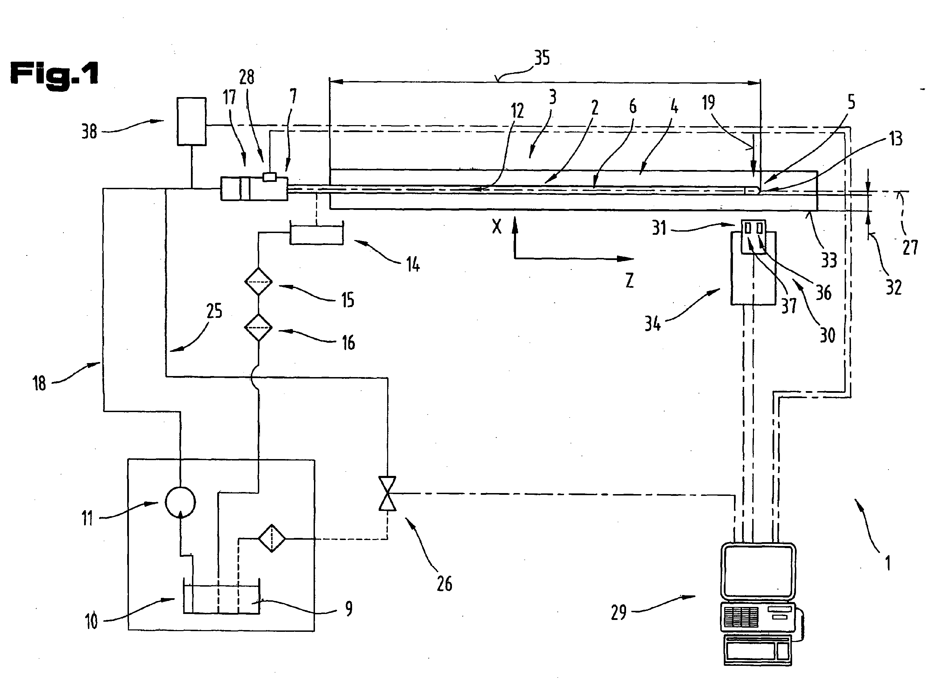

Die Fig. 1 zeigt eine Vorrichtung 1 zum Bohren eines tiefen Bohrlochs 2 in einem Werkstück 3 schematisch vereinfacht dargestellt. Anhand der Fig. 1 wird die Funktionsweisen eines Verfahrens zum Bohren von tiefen Bohrlöchern näher erläutert.

Das Werkstück 3 ist auf einem Aufspanntisch einer Tiefbohrmaschine (nicht dargestellt) befestigt. Bei dem Werkstück 3 handelt es sich um einen sehr langgestreckten Teil, wobei das Bohrloch 2 in etwa parallel bezüglich der Längserstreckung des Werkstücks 3 ausgerichtet ist. Die Herstellung des Bohrlochs 2 erfolgt durch einen Bohrer 4, der durch einen Bohrkopf 5 und einen diesen tragenden Bohrschaft 6 gebildet ist. Der Bohrer 4 wird durch eine Bohrspindel 7, in der der Bohrerschaft 6 befestigt ist, angetrieben.

Die Vorrichtung 1 umfasst weiters einen Bohrfluidkreislauf 8 für ein Kühlschmiermittel bzw. Bohrfluid 9. Während des Bohrens mit dem Bohrer 4 wird das Bohrfluid aus einem Tank 10 durch eine Pumpe 11 angesaugt und durch einen Kanal 12 in dem Bohrerschaft 6 bzw. dem Bohrkopf 5 zu dem Bohrkopf 5 bzw. einer Bohrerspitze 13 gepumpt. Gemeinsam mit den Spänen verlässt das Bohrfluid 9 das Bohrloch 2 wiederum und wird im Bereich der Bohrspindel 7 in einem Auffangbehälter 14 gesammelt. Daran anschließend wird das Bohrfluid 9 durch einen Grobfilter 15 und einen Feinfilter 16 geleitet und gelangt sodann wieder in den Tank 10. Zur Einleitung des Bohrfluids 9 in den Kanal 12 des Bohrerschafts 6 ist an der Bohrspindel 7 eine Drehübergabe 17 vorgesehen, durch die eine Zuführleitung 18 für das Bohrfluid 9 mit dem Kanal 12 bzw. dem Bohrerschaft 6 gekoppelt ist.

Gemäß diesem Ausführungsbeispiel wird der räumliche Längsverlauf des Bohrlochs 2 durch Einleitung einer periodisch über einen vorbestimmbaren Rotationswinkelbereich wirkenden Radialkraft 19 bewirkt, wobei diese Radialkraft 19 durch Druckschwankungen des Bohrfluids 9 erzeugt wird.

Zur Erzeugung der periodischen Druckschwankungen ist eine Pulsleitung 25 ausgebildet, die kurz vor der Drehübergabe 17 in die Zuführleitung 18 einmündet. Die Pulsleitung 25 führt zu einem Ventil 26, dass vorzugsweise als Servoventil ausgebildet ist. Durch Öffnen des Ventils 26 wird ein Teilstrom des Bohrfluids 9 abgezweigt, wodurch eine entsprechende Reduktion des Drucks des Bohrfluids 9 erzeugt wird. Durch periodisches Öffnen bzw. Schließen des Ventils 26 wird somit ein periodisch pulsierender Verlauf des Druckes des Bohrfluids 9 in dem Kanal 12 des Bohrers 4 bzw. im Bereich der Bohrspitze 13 erreicht. Wie nachfolgend noch beschrieben werden wird, ist es möglich durch diese Druckschwankungen des Bohrfluids 9 im Bereich der Bohrerspitze 13 eine periodisch wirkende Radialkraft 19 auf den Bohrkopf 5 zu erzeugen, durch die der räumliche Längsverlauf des Bohrlochs 2 zielgerichtet beeinflusst werden kann. Entsprechend der gewünschten radialen Richtung bzw. des gewünschten Rotationswinkelbereichs für die Radialkraft 19 wird dazu der periodisch pulsierende Druckverlauf des Bohrfluids 9 mit der Rotation des Bohrkopfs 5 bzw. des Bohrers 4 synchronisiert.

Indem das Ventil 26 durch ein Servoventil gebildet ist, kann in vorteilhafter Weise erreicht werden, dass periodisch veränderliche Druckverläufe des Bohrfluids 9 erzeugt werden können, wobei ansteigende und abfallende Flanken in dem Profil des Druckverlaufs gezielt abgeflacht werden können. Sprunghafte Anstiege bzw. sprunghafte Abfälle im Druckverlauf unterbleiben somit, wodurch eine übermäßige mechanische Belastung der verschiedenen Komponenten des Bohrfluidkreislaufs 8 als auch des Werkstücks 3 vermieden wird.

Zur Bestimmung der momentanen relativen Lage des Bohrkopfs 5 des Bohrers 4 bezüglich einer Rotation um eine Bohrerachse 27 ist im Bereich der Bohrspindel 7 ein Drehgeber 28 angeordnet. Mit Hilfe dieses Drehgebers 28 kann sowohl die momentane Winkelstellung des Bohrkopfs 5 relativ zur Bohrachse 27 als auch die Winkelgeschwindigkeit bzw. Drehgeschwindigkeit des Bohrers 4 gemessen werden. Der Drehgeber 28 ist vorzugsweise durch einen Lichtschranken und eine and der Bohrspindel 7 befestigte Blende bzw. Blendenscheibe gebildet. Zur Synchronisation der periodischen Druckschwankungen des Bohrfluids 9 mit der Drehbewegung des Bohrers 4 ist die Vorrichtung 1 mit einer Steuereinrichtung 29 ausgebildet, durch die die Signale des Drehgeber 28 erfasst werden können und andererseits das Ventil 26 in der Pulsleitung 25 entsprechend geöffnet bzw. geschlossen werden kann. Die Steuereinrichtung 29 wird vorzugsweise durch einen Personal Computer gebildet.

Damit das Bohren des Bohrloches 2 mit den gewünschten räumlichen Längsverlauf erfolgen kann, ist die Vorrichtung 1 mit einer Messvorrichtung 30 ausgerüstet, die ebenfalls mit der Steuereinrichtung 29 signalverbunden ist. Die Messvorrichtung 30 verfügt über einen Messkopf 31, mit dessen Hilfe der räumliche Längsverlauf des Bohrlochs 2 bzw. die momentane Position des Bohrkopfs 5 des Bohrers 4 gemessen werden kann. Dies erfolgt vorzugsweise dadurch, dass ein radialer Abstand 32 des Bohrkopfs 5 bzw. des Bohrlochs 2 von einer dem Bohrloch 2 nächstgelegenen Oberfläche 33 des Werkstücks 3 gemessen wird. Der Messkopf 31 der Messvorrichtung 30 ist auf einem Messkopfträger 34 montiert, mit dessen Hilfe er entlang der Oberfläche 33 des Werkstückes 3 bewegt und in seiner räumlichen Lage ausgerichtet werden kann. Die Steuerung des Messkopfträgers 34 erfolgt ebenfalls durch die Steuereinrichtung 29. Neben den Messsignalen des Messkopfs 31 der Messvorrichtung 30 werden von der Steuervorrichtung 29 auch Daten von einer Positionsmesseinrichtung, mit der der Messkopfträgers 34 verbunden ist, erfasst, aus denen die momentane Position des Messkopfs 31 bestimmt werden kann. Andererseits erfolgt durch Ansteuerung entsprechender Schrittmotoren bzw. Pneumatikzylinder eine Verschiebung des Messkopfs 31 an der Oberfläche 33 des Werkstückes 3. Der Messkopf 31 wird vorzugsweise während des Bohrens des Bohrlochs 2 entsprechend einer Tiefe 35 des Bohrlochs 2 durch Bewegung in Z-Richtung mit dem Bohrkopf 5 mitgeführt. Soll nun eine Messung des radialen Abstands 32 erfolgen, so wird der Messkopf 31 mit Hilfe des Messkopfträgers 34 in X-Richtung an die Oberfläche 33 des Werkstücks 3 herangeführt und sodann der radiale Abstand 32 durch den Messkopf 31 detektiert. Diese Detektion kann durch Verschiebung des Messkopfs 31 in Y-Richtung, d.h. in Richtung senkrecht zur Zeichenebene der Fig. 1 bzw. in Richtung senkrecht zur X-Z-Ebene, an unterschiedlichen Y-Positionen des Messkopfs 31 erfolgen. Aus den unterschiedlichen Werten des radialen Abstands 32 zu unterschiedlichen Y-Positionen kann sodann durch Triangulation die Lage des Bohrlochs 2 zu dem entsprechenden Z-Wert berechnet werden. Die durch die Messung des Radialabstands 32 des Bohrlochs 2 gefundenen X-Y-Werte können auch als Mittenabweichung des Bohrlochs 2 interpretiert werden, indem die jeweiligen X-Y-Werte bezogen werden auf den X- bzw. Y-Wert des Anfangs des Bohrlochs 2, d.h. für ein ideal gerade verlaufendes Bohrloch 2 sollten die Differenzen zwischen den X-Y-Werten zu beliebigen Z-Werten des Bohrlochs 2 und dem X-Y-Wert des Anfangs des Bohrlochs 2 stets 0 sein.

Die Messvorrichtung 30 zur Messung des räumlichen Längsverlaufs des Bohrlochs 2 ist vorzugsweise durch ein Ultraschallortungssystem ausgebildet. Der radiale Abstand 32 wird somit anhand der Laufzeit eines entsprechenden an dem Bohrloch 2 bzw. dem Bohrkopf 5 reflektierten Schallimpulses gemessen. Die Messvorrichtung 30 verfügt dazu zumindest über einen Ultraschallsender 36 und zumindest über einen Ultraschallempfänger 37. Der Ultraschallsender 36 und der Ultraschallempfänger 37 sind vorzugsweise in einem gemeinsamen Ultraschallmesskopf bzw. dem gemeinsamen Messkopf 31 angeordnet.

Vor Beginn des Messvorgangs mit der Messvorrichtung 30 wird in dem Bereich zwischen dem Messkopf 31 und der Oberfläche 33 des Werkstücks 3 aus einem Kontaktmittelbehälter ein Kontaktmittel eingebracht, durch das eine unerwünschte Abschwächung der Ultraschallsignale an der Oberfläche 33 möglichst gering gehalten wird.

Die Einleitung eines Messvorgangs des radialen Abstands 32 durch die Messvorrichtung 30 kann wahlweise durch ein Steuersignal der Steuereinrichtung 29 oder durch einen Maschinenbediener ausgelöst werden. Der Messkopf 31 mit dem Ultraschallsender 36 und dem Ultraschallempfänger 37 wird sodann mittels einer pneumatischen Linearführung (nicht dargestellt) des Messkopfträgers 34 an die Oberfläche 33 des Werkstücks 3 gedrückt. Nach der Zufuhr von Kontaktmittel erfolgt die Messung des radialen Abstands 32 an zwei unterschiedlichen Y-Position des Messkopfs 31. Aus den Abständen 32 zu den jeweiligen Y-Positionen des Messkopfs 31 wird sodann der entsprechende X- und Y-Wert des Bohrlochs 2 zur momentanen Z-Position des Messkopfs 31 berechnet. Durch entsprechende Messungen bzw. Berechnungen der X- und Y-Werte des Bohrlochs 2 zu aufeinander folgenden Z-Positionen des Messkopfs 31 kann in der Folge der räumliche Längsverlauf des Bohrlochs 2 bestimmt werden.

Wird durch diese Messung nun eine übermäßige Abweichung vom gewünschten - üblicherweise geraden - räumlichen Längsverlauf des Bohrlochs 2 festgestellt, so wird durch die Steuereinrichtung 29 zunächst die zur Korrektur dieser Abweichung erforderliche Richtung bzw. der entsprechende Rotationswinkelbereich der Radialkraft 19 berechnet. In Kombination mit der momentanen Drehzahl bzw. Winkelgeschwindigkeit des Bohrers 4, die durch den Drehgeber 28 bestimmt wird, berechnet die Steuereinrichtung 29 sodann den erforderlichen zeitlichen Verlauf der periodischen Veränderung des Druckes des Bohrfluids 9 bzw. eine Frequenz und Phasenlage für das Öffnen bzw. Schließen des Ventils 26 zur Erzeugung entsprechender Druckschwankungen bzw. Druckpulse des Bohrfluids 9. Dabei ist die Frequenz der Druckschwankungen des Bohrfluids 9 üblicherweise gleich der Drehzahl des Bohrers 4. Ein bestimmter Rotationswinkelbereich für die Radialkraft 19 kann dadurch erreicht werden, dass die Druckschwankungen mit einer entsprechenden zeitlichen Phasenverschiebung relativ zu einer definierten Anfangsstellung des Bohrkopfs 5 erzeugt werden. Die Anfangsstellung entspricht der relativen Winkelstellung des Bohrkopfs 5 in Bezug auf die Bohrspindel 7. Winkelwerte für radiale Richtungen relativ zu dem feststehenden Werkstück 3 sind also in entsprechende Bruchteile der Periodendauer der Umdrehung des Bohrers 4 umzurechnen. Dies erfolgt vorzugsweise auf automatisierte Weise durch die Steuereinrichtung 29.

Bei dem beschriebenen Verfahren zur Erzeugung der Radialkraft 19 durch Erzeugung von rotationssynchronen Druckschwankungen des Bohrfluids 9 werden von der Steuereinrichtung 29 zur Berechnung des zeitlichen Verlaufs der periodischen Veränderung des Drucks des Bohrfluids 9 weitere Einflussgrößen berücksichtigt. Die relative Winkelstellung des Bohrkopfs 5 in Bezug auf die Bohrspindel 7 wird beim Einspannen des Bohrers 5 in die Bohrspindel 7 festgelegt und ist somit bekannt. Diese relative Winkelstellung des Bohrkopfs erfährt jedoch durch die Verdrillung des Bohrers 4 infolge der beim Bohren auf den Bohrkopf 5 wirkenden Torsion eine entsprechende Veränderung. Diese Veränderung der relativen Winkelstellung ist wiederum von dem auf die Schneide an dem Bohrkopf 5 wirkenden Kräften beeinflusst, kann jedoch von der Steuereinrichtung 29 zumindest näherungsweise berücksichtigt werden. Ebenfalls zu berücksichtigen ist die verzögerte Erzeugung der Radialkraft 19 infolge der endlichen Ausbreitungsgeschwindigkeit der Druckimpulse in den Leitungen des Bohrfluidkreislaufs 8 bzw. dem Kanal 12 in dem Bohrer 4. Die Betätigung des Ventils 26 muss demnach durch die Steuereinrichtung 29 entsprechend der Laufzeit der Druckimpulse in den Leitungen früher erfolgen. Bestimmend dafür sind die Längen der Leitungen bzw. des Kanals 12 und die Schallausbreitungsgeschwindigkeit in dem Bohrfluid 9. Zur Messung des tatsächlichen zeitlichen Verlaufs des Druckes des Bohrfluids 9 ist zumindest in der Zuführleitung 18 des Bohrfluidkreislaufs 8 ein Drucksensor 38 angeordnet. Dieser Drucksensor 38 ist vorzugsweise in der Nähe der Drehübergabe 17 an der Bohrspindel 7 positioniert.

Im Allgemeinen wird die Frequenz für den zeitlichen Verlauf der periodischen Druckschwankungen bzw. Druckpulse des Bohrfluids 9 gleich groß gewählt, wie die Drehzahl des Bohrers 4, d.h., dass bei jeder Umdrehung des Bohrers 4 jeweils ein Druckimpuls durch den Bohrkopf 5 in das Bohrloch 2 eingeleitet wird. Gemäß einer variante des Verfahrens ist vorgesehen, dass die Einleitung der Druckimpulse nicht bei jeder Umdrehung des Bohrers 4 erfolgt. So kann beispielsweise vorgesehen sein, dass nur nach jeweils zwei, drei, vier usw. Umdrehungen die Einleitung eines Druckimpulses des Bohrfluids 9 zur Erzeugung der Radialkraft 19 erfolgt. D.h. das Verhältnis aus der Frequenz der Umdrehung des Bohrers 4 bzw. der Drehzahl des Bohrers 4 und der Frequenz des zeitlichen Verlaufs der periodischen Veränderung des Druckes bzw. der Druckimpulse des Bohrfluids 9 ist ganzzahlig, d.h. beispielsweise 2, 3, 4, usw. Diese Vorgehensweise, die Druckimpulse des Bohrfluids 9 durch die Steuereinrichtung 29 mit einer Frequenz zu erzeugen, die nur einem Bruchteil der Drehzahl des Bohrers 4 entspricht, bietet den Vorteil einer zusätzlichen Möglichkeit zur Beeinflussung der Stärke bzw. Intensität der Ablenkung des Bohrkopfs 5 zur Beeinflussung des räumlichen Längsverlaufs des Bohrlochs 2. Alleine durch eine entsprechende Reduktion der Frequenz des periodischen Druckverlaufs kann die Krümmung des Bohrlochs 2 reduziert werden, indem während des Eindringens des Bohrers 4 in das Werkstück 3 entsprechend weniger Druckimpulse auf den Bohrkopf 5 einwirken. D.h. die den Bohrkopf 5 ablenkenden Druckimpulse sind über eine größeren Längenbereich der Tiefe 35 des Bohrlochs 2 verteilt. Ein weiterer Vorteil besteht auch darin, dass durch die geringere Frequenz der Druckimpulse des Bohrfluids 9 die mechanische Belastung des Ventils 26 entsprechend geringer ist.

Als Bohrfluid 9 werden handelsübliche Bohröle mit einer Viskosität bei 40 °C bis max. 30 mm²/sec verwendet. Das Bohrfluid 9 weist bevorzugt eine Viskosität bei 40 °C aus einem Bereich bis max. 22 mm²/sec auf. Durch die Pumpe 11 des Bohrfluidkreislaufs 8 wird zur Erzeugung der Radialkraft 18 ein Druck aus einem Bereich von zumindest 60 bar erzeugt. Als zeitlich veränderbare Komponente des Druckes werden Druckdifferenzen aus einem Bereich von 15 bis 30 bar verwendet. Um durch größere Druckdifferenzen eine entsprechend größere Radialkraft 19 erzeugen zu können, wird von der Pumpe 11 ein Druck aus einem Bereich von zumindest 160 bar bzw. auch ein Druck aus einem Bereich von zumindest 300 bar erzeugt. Je nach der Werkstofffestigkeit des Werkstücks 3 kann auch vorgesehen werden, dass der Druck des Bohrfluids 9 aus einem Bereich von zumindest 600 bar verwendet wird. In Spezialfällen ist auch vorgesehen, dass der Druck des Bohrfluids 9 aus einem Bereich von zumindest 4.000 bar verwendet wird. Dazu ist insbesondere vorgesehen, dass die den Bohrfluidkreislauf 8 bildenden Leitungen, d.h. zumindest die Zuführleitung 18 und die Pulsleitung 25 aus Materialien gefertigt sind, die eine hohe Stabilität gegenüber einer radialen bzw. auch gegenüber einer longidudinalen Dehnung bzw. einen hohen Elastizitätsmodul aufweisen. Dadurch können unerwünschte Druckverluste der an die Bohrerspitze 13 geleiteten Druckimpulse zur Erzeugung der Radialkraft 19 weitestgehend verhindert werden.

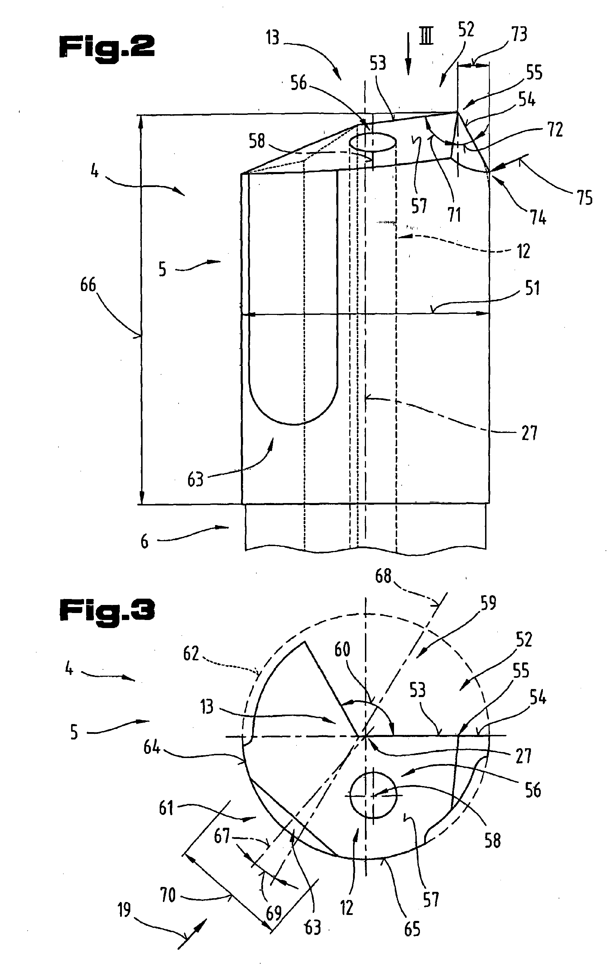

Anhand der nachfolgenden Fig. 2 und 3 wird ein erstes Ausführungsbeispiel des erfindungsgemäßen Bohrers 4 beschrieben.

Die Fig. 2 zeigt eine Seitenansicht des Bohrers 4 aus einer senkrecht bezüglich der Bohrerachse 27 gerichteten Blickrichtung. Von dem den Bohrkopf 5 des Bohrers 4 tragenden Bohrerschaft 6 ist dabei nur ein kurzes Stück dargestellt. Die grundsätzliche Form des Bohrers 4 ist ähnlich einem sogenannten Einlippenbohrer ausgebildet. D.h. der Bohrkopf 5 weist an der Bohrerspitze 13 nur eine sich über einen Teil eines Durchmessers D 51 des Bohrers 4 erstreckende Schneide 52 auf. Die Schneide 52 wird aus einem ersten Schneidenabschnitt 53 der der Bohrerachse 27 zugewandt ist, und einem zweiten Schneidenabschnitt 54 der der Bohrerachse 27 abgewandt ist, gebildet, wobei zwischen den beiden Schneidenabschnitten 53, 54 eine Schneidenspitze 55 ausgebildet ist. Der Kanal 12 zur Zuführung des Bohrfluids 9 (Fig. 1) weist eine Austrittsöffnung 55, die im Bereich einer Stirnseite 57 der Bohrerspitze 13 angeordnet ist, auf, wobei eine Mündungsachse 58 der Austrittsöffnung 55 bzw. des Kanals 12 zumindest annähernd parallel bezüglich der Bohrerachse 27 ausgerichtet ist.

Die Fig. 3 zeigt eine Draufsicht auf den Bohrkopf 5 des Bohrers 4 gemäß Fig. 2.

Der Bohrer 4 bzw. Bohrkopf 5 weist eine seitliche Querschnittsverengung in Form einer V-förmigen Spanabführnut bzw. einer Sicke 59 auf. Durch diese Sicke 59 werden an der Schneide 52 während des Bohrens entstehende Späne gemeinsam mit dem Bohrfluid 9 aus dem Bohrloch 2 (Fig. 1) abtransportiert.

Die Sicke 59 weist einen Öffnungswinkel 60 von etwa 120° auf und reicht in etwa bis zur Bohrerachse 27. An einer der Sicke 59 abgewandten Bohrerseite 61 ist eine den Querschnitt des Bohrkopfes 5 bezüglich einer einhüllenden Zylindermantelfläche 62 des Bohrkopfes 5 reduzierende Rückversetzung 63 ausgebildet. Die Rückversetzung 63 an dem Bohrkopf 5 ist zwischen einer ersten Zylindermantelteilfläche 64 und einer zweiten Zylindermantelteilfläche 65 des Bohrkopfes 5 angeordnet bzw. wird die Rückversetzung 63 seitlich von den beiden Zylindermantelteilflächen 64, 65 begrenzt. Bezüglich einer zur Bohrerachse 27 parallelen Richtung erstreckt sich die Rückversetzung 63 über zumindest 50 % einer Länge L 66 des Bohrkopfes 5. Vorzugweise ist vorgesehen, dass sich die Rückversetzung 63 in axialer Richtung über zumindest 75 % der Länge L 66 des Bohrkopfes 5 bzw. über die gesamte Länge L 66 des Bohrkopfs 5 erstreckt. Gemäß diesem Ausführungsbeispiel ist die Rückversetzung 63 ebenflächig ausgebildet, wobei eine Flächennormale 67 der Rückversetzung 63 mit einer Winkelhalbierenden 68 des Öffnungswinkels 60 der Sicke 59 einen Winkel 69 von ca. 10° einschließt. Die Anordnung der Rückversetzung 63 an den Bohrkopf 5 bezüglich der Sicke 59 erfolgt so, dass der Winkel 69 einen Wert aus einem Bereich von - 50 ° bis + 50 ° hat, bevorzugt wird der Winkel 69 mit einem Wert aus einem Bereich von - 30 ° bis + 30 ° gewählt. Zur Bohrerspitze 13 hin ist die Rückversetzung 63 durchgehend verlaufend. Während des Bohrvorganges des Bohrloches 2 (Fig. 1) strömt Bohrfluid 9, das durch den Kanal 12 in den Bereich des Bohrkopfes 5 transportiert wird und durch die Austrittsöffnung 56 in den Bereich der Bohrerspitze 13 in das Bohrloch 2 ausströmt, auch in den Bereich der Rückversetzung 63 und füllt das durch diese Rückversetzung 63 und die Seitenwand des Bohrloches 2 (entspricht der einhüllenden Zylindermantelfläche 62) gebildete Volumen auf. Das im Bereich der Rückversetzung 63 befindliche Bohrfluid 9 bildet somit einen Druckpolster, der als die seitlich wirkende Radialkraft 19 auf den Bohrkopf 5 einwirkt. Bleibt der Druck des Bohrfluids 9 konstant, so bleibt auch die Radialkraft 19 konstant und somit über eine gesamte Umdrehung um 360° ohne erkennbare Wirkung. Nur im Falle eines periodisch veränderlichen Druckverlaufs, der mit der Rotationsbewegung des Bohrers 4 synchron verläuft, kommt es in Folge dieser so pulsierenden Radialkraft 19 zu einer resultierenden Kraftwirkung, deren Richtung relativ zu dem Werkstück 3 eine gleichbleibende räumliche Ausrichtung ausweist. Dadurch wird auf den Bohrkopf 5 des Bohrers 4 eine ablenkende Wirkung, die in die entsprechende räumliche Richtung weist, ausgeübt. Die Ausbildung der Rückversetzung 63 in Kombination mit einem umlaufsynchronen periodischen Druckverlauf des in den Bereich der Bohrerspitze 13 zugeleiteten Bohrfluids 9 ermöglicht somit eine zielgerichtete Beeinflussung des räumlichen Längsverlaufs des Bohrloches 2 (Fig. 1).

Die Rückversetzung 63 ist vorzugsweise mit einer Breite 70 ausgebildet, sodass das Verhältnis des Durchmessers D 51 des Bohrkopfes 5 zu der Breite 70 gleich ist einem Wert aus einem Bereich bis maximal 0,8. Das Verhältnis des Durchmessers D 51 zur Breite 70 wird bevorzugt mit einem Wert aus einem Bereich von 0,1 bis 0,7 gewählt. Das Verhältnis der Länge L 66 des Bohrkopfes 5 zu dessen Durchmesser D 51 hat einen Wert aus einem Bereich von 0,5 bis 10. Vorzugsweise wird der Bohrkopf 5 derart geformt, dass das Verhältnis aus der Länge L 66 zu dem Durchmesser D 51 einen Wert aus einem Bereich von 1 bis 4 hat.

Die zielgerichtete Beeinflussung des räumlichen Längsverlaufes des Bohrloches 2 kann auch durch eine spezielle Wahl der Form der Schneide 52 an der Bohrerspitze 13 des Bohrkopfes 5 unterstützt werden. Dazu ist vorgesehen, dass ein erster Schneidenwinkel 71 des ersten Schneidenabschnittes 53 bezüglich der Bohrerachse 27 einen Wert von zumindest 70° hat. Vorzugsweise wird für den ersten Schneidenwinkel 71 ein Wert von zumindest 80° gewählt. Andererseits ist vorgesehen, dass ein zweiter Schneidenwinkel 72, der zwischen dem zweiten Schneidenabschnitt 54 und der Bohrerachse 27 eingeschlossen ist, einen Wert aus einem Bereich von 20 ° bis 90 ° aufweist. Vorzugsweise wird der zweite Schneidenwinkel 72 mit einem Wert aus einem Bereich von 35 ° bis 80 ° gewählt. Die zwischen den beiden Schneidenabschnitten 53, 54 gebildete Schneidenspitze 55 ist von der einhüllenden Zylindermantelfläche 62 des Bohrkopfes 5 um einen Randabstand 73 distanziert, wobei der Wert des Randabstandes 73 bevorzugt aus einem Bereich von 1/10 bis 1/3 des Durchmessers D 51 gewählt ist. Günstig erweist sich insbesondere ein Wert des Randabstandes 73 aus einem Bereich von 1/5 bis 1/4 des Durchmessers D 51. Diese Formgebung der Schneide 52 mit dem relativ großen ersten Schneidenwinkel 71 erlaubt eine effektive seitliche Ablenkung durch die Radialkraft 19.

Bei einer weiteren Ausführungsvariante des erfindungsgemäßen Bohrkopfes 5 des Bohrers 4 ist vorgesehen, dass der zweite Schneidenabschnitt 54 an dessen der Bohrerachse 27 bzw. der Schneidenspitze 55 abgewandten Endbereich 74 zu der einhüllenden Zylindermantelfläche 62 hin abgerundet ist. Diese alternative Ausführungsvariante ist in Fig. 2 durch strichlierte Linien dargestellt. Dabei ist vorgesehen, dass der zweite Schneidenabschnitt 54 an diesem Endbereich 74 einen Krümmungsradius 75 aufweist, dessen Wert maximal ½ des Durchmessers D 51 entspricht. Entsprechend der zu der einhüllenden Zylindermantelfläche 62 hin abgerundeten Form des Bohrkopfes 5 ist auch vorgesehen, dass der an den zweiten Schneidenabschnitt 54 anschließende und der einhüllenden Zylindermantelfläche 62 zugewandte Rand der Bohrerspitze 13 ebenfalls abgerundet ist bzw. eine rundumlaufende Phase (nicht dargestellt) aufweist.

Der Durchmesser D 51 des Bohrers 4 wird bevorzugt mit einem Wert aus einem Bereich von 3 mm bis 40 mm gewählt. Vorteilhaft erweisen sich insbesondere Bohrer 4 mit einem Wert des Durchmesser D 51 aus einem Bereich von 4 mm bis 20 mm.

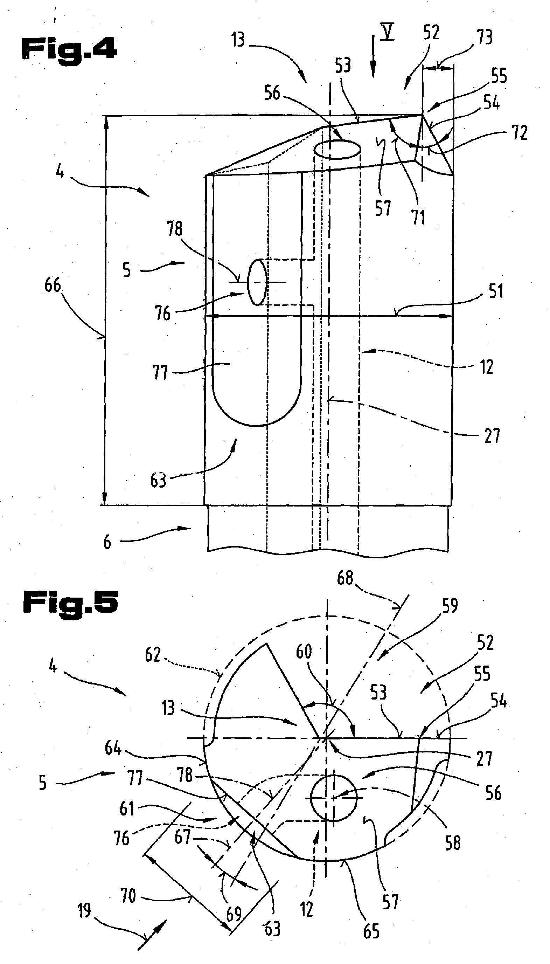

Anhand der nachfolgenden Fig. 4 und 5 wird ein weiteres Ausführungsbeispiel des erfindungsgemäßen Bohrers 4 beschrieben.

Die Fig. 4 zeigt eine Seitenansicht des Bohrers 4 mit einer zweiten Austrittsöffnung 76, die in einem Oberflächenbereich 77 der Rückversetzung 63 angeordnet ist.

Die Fig. 5 zeigt eine Draufsicht auf den Bohrkopf 5 des Bohrers 4 gemäß Fig. 4. Eine Mündungsachse 78 der Austrittsöffnung 76 ist dabei parallel bezüglich der Flächennormalen 67 der Rückversetzung 73 bzw. des Oberflächenbereichs 77 ausgerichtet. In dem das Bohrfluid 9 (Fig. 1) durch diese zweite Austrittsöffnung 76 direkt in den Bereich der Rückversetzung 63 einströmen kann, wird eine Behinderung der Druckimpulse des Bohrfluids 9 durch den Umweg über die Stirnseite 57 der Bohrerspitze 13 vermieden und so die Ausbildung der Radialkraft 19 begünstigt.

In einer weiteren Ausführungsvariante kann vorgesehen sein, dass in dem Bohrkopf 5 des Bohrers 4 nur im Bereich der Rückversetzung 63 eine oder mehrere Austrittsöffnungen 76 ausgebildet sind. Die Austrittsöffnung 56 im Bereich der Stirnseite 57 der Bohrerspitze 13 ist in dieser alternativen Ausführungsvariante nicht vorgesehen. Damit ist es möglich, dass beim Bohren mit dem Bohrer 4 zumindest ein Teilstrom des Bohrfluids 9 mit einer Ausströmrichtung gegen eine seitliche Innenwand des Bohrlochs 2 (Fig. 1) gerichtet ist.

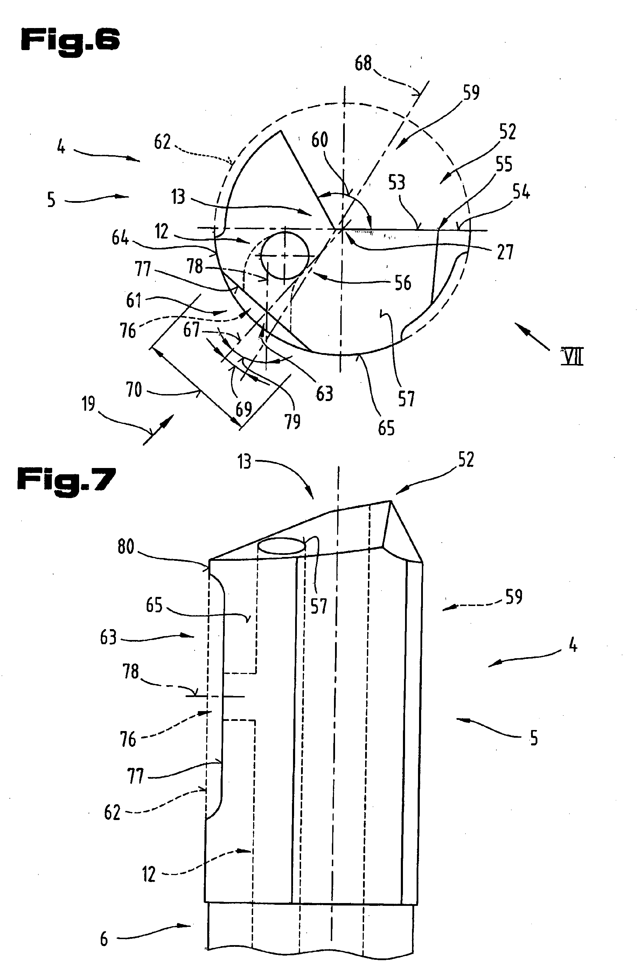

Fig. 6 zeigt ein weiteres Ausführungsbeispiel des Bohrers 4 mit einer Austrittsöffnung 76 im Bereich der Rückversetzung 63 gemäß Fig. 5 in Draufsicht auf die Bohrerspitze 13. Die zweite Austrittsöffnung 76 ist bezüglich der Flächennormalen 67 der Rückversetzung 63 geneigt angeordnet, d.h. die Mündungsachse 78 schließt mit der Flächennormalen 67 einen Neigungswinkel 79, dessen Wert aus einem Bereich bis maximal 80 ° gewählt ist, ein. Die Mündungsachse 78 der zweiten Austrittsöffnung 76 ist vorzugsweise so ausgerichtet, dass der Neigungswinkel 79 einen Wert aus einem Bereich von 30 ° bis 60 ° hat.

Die Fig. 7 zeigt eine Seitenansicht des Bohrers 4 gemäß Fig. 6. Die Rückversetzung 63 ist zum Unterschied zu den bisher beschriebenen Ausführungsbeispielen des Bohrers 4 zur Bohrerspitze 13 hin von einer weiteren Zylindermantelteilfläche 80 der einhüllenden Zylindermantelfläche 62 entsprechend dem Durchmesser D 51 begrenzt. Diese Zylindermantelteilfläche 80 wirkt einerseits als Führungsfase für den Bohrkopf 5 zur gleitenden Anlage an der Innenwand des Bohrlochs 2 (Fig. 1) und verhindert andererseits das Entweichen des Bohrfluids 9 aus dem Bereich der Rückversetzung 63 über die Stirnseite 57 der Bohrerspitze 13 hin zu der Sicke 59. Durch die Begrenzung der Rückversetzung 63 durch die Zylindermantelteilfläche 80 wird der Aufbau der Radialkraft 19 durch Einleitung von Druckimpulsen begünstigt.

Gemäß einem weiteren Ausführungsbeispiel ist vorgesehen, dass zwei oder mehrere voneinander durch zwischenliegende Zylindermantelteilflächen voneinander distanzierte Rückversetzungen 63 ausgebildet sind, wobei jeweils in dem Oberflächenbereich 77 der Rückversetzung 63 eine Austrittsöffnung 76 des Kanals 12 vorgesehen ist.

In den Ausführungsbeispielen des Bohrers 4, gemäß den Fig. 2 bis 5, ist vorgesehen, dass die Rückversetzung 63 bezüglich der Bohrerachse 27 bzw. der Längsmittelachse des Bohrers 4 parallel ausgerichtet ist. Gemäß einer alternativen Ausführungsvariante des Bohrers 4 kann auch vorgesehen sein, dass die Rückversetzung 63 gegenüber der Bohrerachse 27 geneigt ausgebildet ist.

Ein weiteres Ausführungsbeispiel des Bohrers 4 ermöglicht die Einwirkung eines Drehmoments auf den Bohrkopf 5 des Bohrers 4. Dazu ist neben der Austrittsöffnung 76 im Bereich der Rückversetzung 63 (Fig. 4) eine weitere Austrittsöffnung (nicht dargestellt) in einem durch die Sicke 59 gebildeten Oberflächenbereich des Bohrkopfs 5 angeordnet. Die Austrittsöffnung 76 im Bereich der Rückversetzung 63 ist dabei der Bohrerspitze 13 näherliegend angeordnet als die zweite Austrittsöffnung in der Sicke 59. Ein durch den Kanal 12 in den Bereich des Bohrkopfs 5 des Bohrers 4 eingeleiteter Druckimpuls des Bohrfluids 9 hat infolge der entsprechenden Reaktionskräfte auf den Bohrkopf 5 die Wirkung eines Drehmoments. Diese Ausbildung des Bohrkopfs 5 bietet die Möglichkeit einer zusätzlichen, eigenständigen Form der Beeinflussung des Längsverlaufs des Bohrlochs 2 (Fig. 1).

Bei der Durchführung des Verfahrens zur Bohrung von tiefen Bohrlöchern 2 ist weiters vorgesehen, zur Beeinflussung des räumlichen Längsverlaufes des Bohrlochs 2 das Bohren mit dem Bohrer 4 mit dem Durchmesser D 51 zu unterbrechen und eine Teillänge des Bohrlochs 2 unter Zuhilfenahme eines Bohrleitrohrs in Kombination mit einem konventionellen Einlippenbohrer oder einem Bohrer 4 wie oben beschrieben zu bohren. Dabei wird mit einem Bohrer, dessen Durchmesser kleiner ist als der Durchmesser D 51 exzentrisch bezüglich der Längsmittelachse des Bohrlochs 2 (Fig. 1) ein entsprechendes Bohrloch vorgebohrt. Wird daran anschließend der Bohrprozess mit dem ursprünglichen Bohrer 4 mit dem Durchmesser D 51 fortgesetzt, so erfährt der Bohrkopf 5 beim Eindringen in das vorgebohrte Bohrloch bzw. beim Aufbohren des vorgebohrten Bohrlochs eine Ablenkung bzw. Radialkraft 19 entsprechend der exzentrischen Anordnung des vorgebohrten Bohrloches.

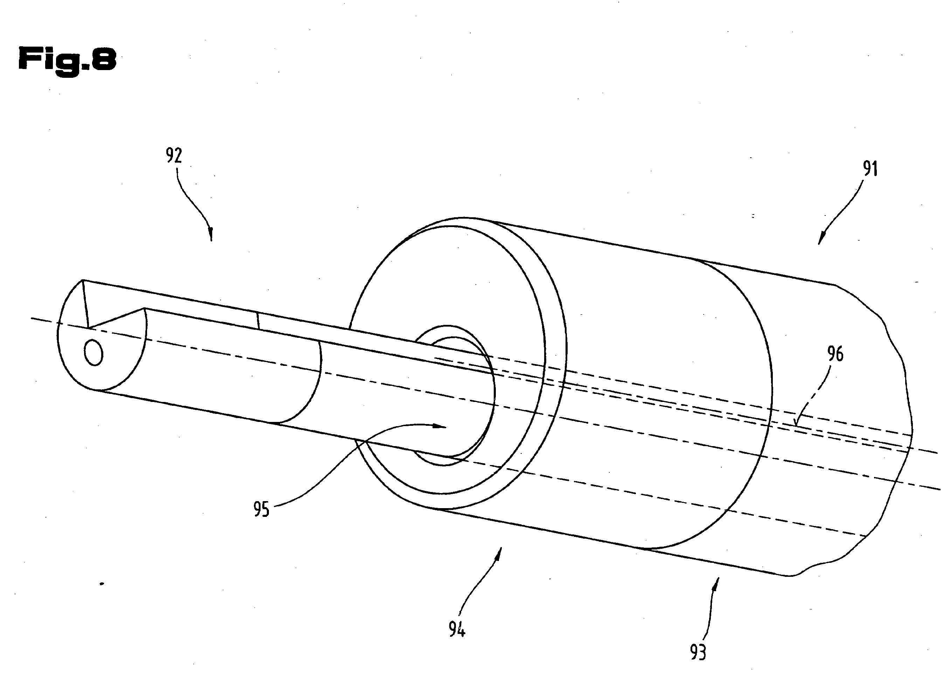

Die Fig. 8 zeigt ein Bohrleitrohr 91 mit einem Bohrer 92 zur Erzeugung einer exzentrischen Vorbohrung.

Das Bohrleitrohr 91 umfasst einen Bohrbuchsenschaft 93, in dessen einem Ende eine Bohrbuchse 94 eingesetzt und darin befestigt ist. Die Bohrbuchse 94 verfügt über ein Bohrerführungsloch 95, das exzentrisch bezüglich einer Längsmittelachse 96 der Bohrbuchse 94 angeordnet ist. Wird nun das Bohrleitrohr 91 in das Bohrloch 2 (Fig. 1) eingeführt und durch Verdrehen das Bohrerführungsloch 95 entsprechend ausgerichtet, so kann mit Hilfe des Bohrers 92 ein exzentrisch angeordnetes Bohrloch von entsprechend geringerem Durchmesser vorgebohrt werden.

Als Bohrbuchsenschaft 93 wird bevorzugt ein Metallrohr verwendet, in dessen einen Endbereich die Bohrbuchse 94 eingesetzt und darin beispielsweise durch Verkleben befestigt wird.

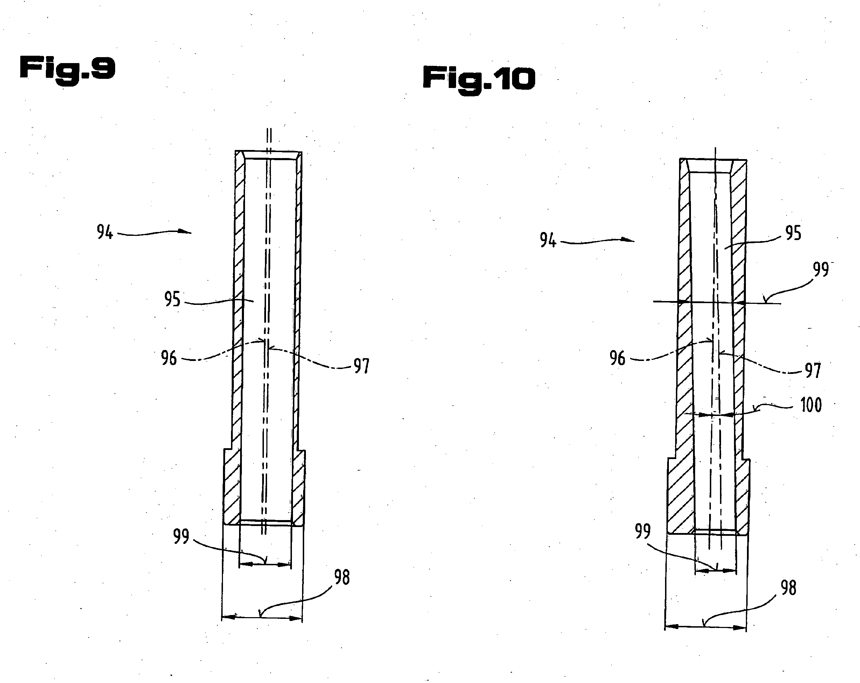

Die Fig. 9 zeigt eine Bohrbuchse 94 eines Bohrleitrohrs 91, gemäß Fig. 8, geschnitten dargestellt. Das Bohrführungsloch 95 ist exzentrisch bezüglich der Längsmittelachse 96 der Bohrbuchse 94 angeordnet. Gemäß diesem Ausführungsbeispiel der Bohrbuchse 94 ist vorgesehen, dass eine Achse 97 des Bohrerführungslochs 95 parallel bezüglich der Längsmittelachse 96 der Bohrbuchse 94 ausgerichtet ist. Ein äußerer Durchmesser 98 der Bohrbuchse 94 ist geringfügig kleiner als der Durchmesser D 51 des Bohrkopfs 5 des Bohrers 4 (Fig. 2) und kann somit in das Bohrloch 2 (Fig. 1) eingeführt werden. Das Bohrerführungsloch 95 ist mit einem Durchmesser 99 ausgebildet, der so bemessen ist, dass der Bohrer 92 (Fig. 8) mit möglichst geringem Spiel hindurchgeführt werden kann.

Die Fig. 10 zeigt ein weiteres Ausführungsbeispiel einer Bohrbuchse 94 eines Bohrleitrohrs 91, gemäß Fig. 8, geschnitten dargestellt.

Das Bohrerführungsloch 95 ist bei diesem Ausführungsbeispiel der Bohrbuchse 94 bezüglich der Längsmittelachse 96 schräg ausgerichtet. D.h. die Achse 97 des Bohrerfühnmgslochs 95 schließt mit der Längsmittelachse 96 der Bohrbuchse 94 einen Neigungswinkel 100 ein. Der Neigungswinkel 100 ist auch einem Bereich zwischen 0 ° und 5 °, bevorzugt zwischen 0,5 ° und 1,5° gewählt. Mit dieser Bohrbuchse 94 kann somit eine entsprechend schräg ausgerichtete Vorbohrung in dem Bohrloch 2 (Fig. 1) erzeugt werden. Wird nach dem Vorbohren unter Verwendung dieser Bohrbuchse 94 der Bohrprozess mit dem ursprünglichen Bohrer 4 mit dem Durchmesser D 51 fortgesetzt, so erfährt der Bohrkopf 5 beim Eindringen in das vorgebohrte Bohrloch bzw. beim Aufbohren des vorgebohrten Bohrlochs eine Ablenkung bzw. Radialkraft 19, entsprechend dem Neigungswinkel 100 und der beim Einsetzen des Bohrleitrohrs 91 in das Bohrloch 2 (Fig. 1) gewählten radialen Richtung des Bohrerführungslochs 95.

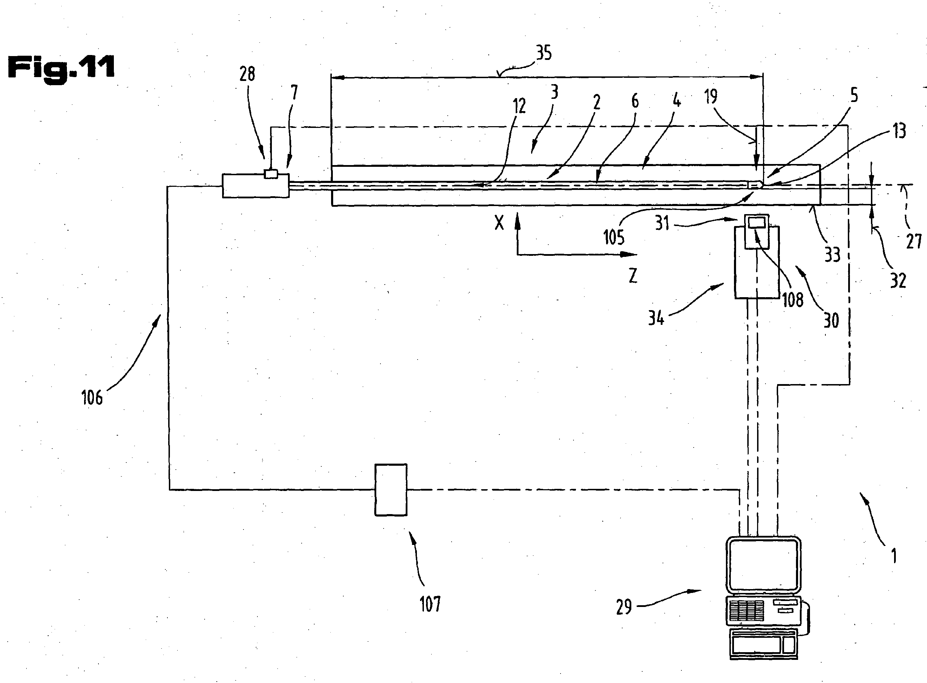

Die Fig. 11 zeigt ein weiteres Ausführungsbeispiel der Vorrichtung 1 zum Bohren des Bohrlochs 2 in dem Werkstück 3, schematisch vereinfacht dargestellt.

Die Erzeugung der Radialkraft 19 erfolgt bei diesem Ausführungsbeispiel der Vorrichtung 1 auf elektromechanischem Wege. Dazu ist an dem Bohrkopf 5 des Bohrers 4 ein piezoelektrisches Element 105 vorgesehen. Über eine Leitung 106 steht das piezoelektrische Element 105 mit einer Steuerelektronik 107 in Verbindung. Zur zielgerichteten Beeinflussung des räumlichen Längsverlaufs des Bohrlochs 2 werden von der Steuereinrichtung 29 durch Erfassung der Daten des Drehgebers 28 die Drehzahl bzw. Frequenz der Rotation des Bohrers 4 und die momentane Lage bzw. Ausrichtung der Schneide 52 (Fig. 3) ermittelt und durch Übermittlung entsprechender Signale an die Steuerelektronik 107 das piezoelektrische Element 105 zur Erzeugung von umlaufsynchronen, periodischen Druckimpulsen veranlasst. Die Einstellung der räumlichen Richtung der Radialkraft 19 erfolgt, wie bereits oben ausgeführt worden ist, durch eine entsprechende Wahl der zeitlichen Phasenverschiebung in Bezug auf die Rotationsbewegung des Bohrers 4.

Auch bei diesem Ausführungsbeispiel der Vorrichtung 1 erfolgt eine Zuleitung des Bohrfluids 9 (Fig. 1) in das Bohrloch 2 in den Bereich des Bohrkopfs 5 des Bohrers 4, durch den Kanal 12 in den Bohrer 4 und dient in der sonst üblichen Weise der Kühlung und Schmierung des Bohrers 4 als auch der Entfernung der Späne. Aus Gründen der besseren Übersichtlichkeit ist jedoch ein entsprechender Bohrfluidkreislauf (Fig. 1) in Fig. 11 nicht dargestellt.

Die Messvorrichtung 30 zur Messung des räumlichen Längsverlaufs des Bohrlochs 2 ist bei diesem Ausführungsbeispiel der Vorrichtung 1 durch ein Messsystem unter Verwendung elektromagnetischer Strahlung ausgebildet. Der Messkopf 31 ist dazu mit einem Strahlendetektor 108 ausgestattet. Andererseits ist vorgesehen, dass an dem Bohrkopf 5 ein elektromagnetische Strahlung emittierendes Element angeordnet ist. Der radiale Abstand 32 kann nach entsprechender Kalibration des Strahlendetektors 108 anhand der Intensität der von dem Bohrkopf 5 ausgehenden, elektromagnetischen Strahlung gemessen werden. Durch das Zwischen dem Bohrkopf 5 und dem Strahlendetektor 108 befindliche Material des Werkstücks 3 erfährt die emittierte elektromagnetische Strahlung eine entsprechende Abschwächung, die als Grundlage für die Bestimmung des radialen Abstands 32 dienen kann.

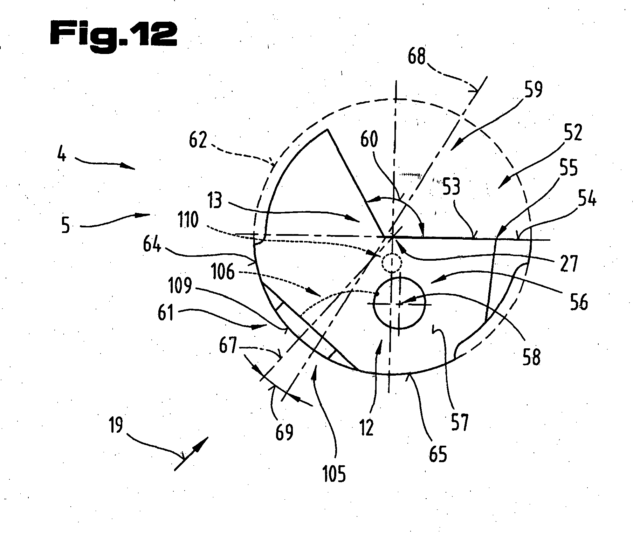

Die Fig. 12 zeigt einen Bohrer 4 entsprechend dem Ausführungsbeispiel der Vorrichtung 1, gemäß Fig. 11.

An der der Sicke 59 abgewandten Bohrerseite 61 ist seitlich an dem Bohrkopf 5 das piezoelektrische Element 105 angeordnet. Eine äußere Anlageseite 109 des piezoelektrischen Elements 105 ist dabei mit der einhüllenden Zylindermantelfläche 62 des Bohrkopfs 5 fluchtend ausgebildet. D.h. wenn sich der Bohrer 4 in dem Bohrloch 2 befindet, so liegt das piezoelektrische Element 105 mit seiner Anlageseite 109 an der seitlichen Innenwand des Bohrlochs 2 an bzw. gleitet die Anlageseite 109 an dieser seitlichen Innenwand. Durch die Einleitung entsprechender elektrischer Impulse, die über die Leitung 106 zugeführt werden, kann das piezoelektrische Element 105 zur Erzeugung eines Druckimpulses bzw. einer Kraft, die gegen die seitliche Innenwand des Bohrlochs 2 gerichtet ist (Fig. 11), veranlasst werden. Als Reaktionskraft dazu wirkt auf den Bohrkopf 5 die Radialkraft 19.

In dem Bohrkopf 5 ist weiters ein elektromagnetische Strahlung emittierendes Element 110 angeordnet. Es ist vorzugsweise möglichst nahe der Bohrerachse 27 positioniert. Dieses elektromagnetische Strahlung emittierende Element 110 dient dazu in Zusammenwirkung mit dem Strahlendetektor 108 der Messvorrichtung 30 (Fig. 11) den räumlichen Längsverlaufs des Bohrlochs 2 bzw. dessen Abstand 32 von der Oberfläche 33 des Werkstücks 3 zu messen. Als elektromagnetische Strahlung emittierendes Element 110 wird vorzugsweise ein Stück eines Gammastrahlung emittierenden Elements verwendet. Das Element 110 und der Strahlendetektor 108 bilden somit Teile eines Gamma-Strahlenmesssystems.

Mit der erfindungsgemäßen Vorrichtung 1 ist es somit möglich, ein Verfahren zum Bohren von besonders tiefen Bohrlöchern 2 auszuführen. Selbst bei Tiefe / Durchmesser-Verhältnissen der Bohrlöcher 2 mit Werten größer als 100 aber auch größer als 300 ist mit diesem Verfahren noch eine zielgerichtete Beeinflussung des Längsverlaufs des Bohrlochs 2 möglich.

Unter Verwendung der Steuereinrichtung 29 ist die Durchführung des Verfahrens weitestgehend automatisiert möglich. Ein typischer Bohrprozess unter Verwendung der Vorrichtung 1 umfasst folgende Verfahrensschritte. Zunächst wird das Bohren des Bohrlochs 2 ohne die Einwirkung einer periodischen Radialkraft 19 begonnen. Während des zunehmenden Eindringens des Bohrers 4 in das Werkstück 3 wird an vorgewählten Z-Positionen (Fig. 1) oder wahlweise auch kontinuierlich die momentane Lage des Bohrlochs 2 mit Hilfe der Messvorrichtung 30 vermessen. Kann anhand der dabei gemessen X-Y-Werte eine Abweichung von dem gewünschten - üblicherweise geradlinigen - Längsverlauf des Bohrlochs 2 festgestellt werden, so wird von der Steuereinrichtung 29 die entsprechende radiale Richtung der Radialkraft 19 berechnet, die erforderlich ist, den Längsverlauf des Bohrlochs 2 zu dem gewünschten idealen Verlauf hin zurückzuführen. Dieser Vorgang kann anhand weiterer, kontinuierlich oder auch intermittierend erfolgender Messungen des Abstands 32 mit Hilfe der Messvorrichtung 30 beobachtet werden, indem der weitere, räumliche Längsverlauf des Bohrlochs 2 durch Messung der entsprechenden X-Y-Werte festgestellt wird. Durch die Steuereinrichtung 29 kann somit auch während des andauernden Bohrvorgangs immer wieder eine neue Berechnung der erforderlichen radialen Richtung der Radialkraft 19 und eine entsprechende Ansteuerung des Ventils 26 des Bohrfluidkreislaufs 8 (Fig. 1) bzw. eine Ansteuerung der Steuerelektronik 107 für das piezoelektrische Element 105 (Fig. 11) erfolgen. Die erfindungsgemäße Vorrichtung 1 bildet somit einen Regelkreis bzw. ein Regelsystem, indem die Reaktion des Verlaufs des Bohrers 4 auf die pulsierend eingeleitete Radialkraft 19 gemessen wird und die daraus erhaltene Information zu einer steuernden Neueinstellung der Richtung der Radialkraft 19 benutzt wird.

Insbesondere wenn die Messung des räumlichen Längsverlaufs des Bohrlochs darauf schließen lässt, dass die Einwirkung der Radialkraft 19 in der oben beschriebenen Weise nicht ausreichend ist, kann der Bohrvorgang mit dem Bohrer 4 unterbrochen werden, um eine sogenannte Stichlochbohrung unter Verwendung des Bohrleitrohrs 91 mit dem Bohrer 92 (Fig. 8) durchzuführen. Dazu wird das Bohrleitrohr 91 mit dem exzentrisch angeordneten Bohrerführungsloch 95 der Bohrbuchse 94 in das Bohrloch 2 (Fig. 1) eingeführt und das Bohrerführungsloch 95 so ausgerichtet, dass es dem gewünschten, idealen räumlichen Längsverlaufs des Bohrlochs 2 möglichst nahe liegt. Der Bohrer 92 wird sodann durch das Bohrcrführungsloch 95 hindurchgeführt und eine Bohrung über eine Länge, die in etwa der Länge L 66 des Bohrkopfs 5 des Bohrers 4 entspricht, gebohrt. Der Bohrer 92 und das Bohrleitrohr 91 werden sodann aus dem Bohrloch 2 entfernt, woraufhin der Bohrvorgang unter Verwendung des Bohrers 4 mit dem Durchmesser D 51 fortgesetzt wird.

Das Verfahren wird bevorzugt dazu verwendet, möglichst geradlinig verlaufende Bohrlöcher 2 in dem Werkstück 3 herzustellen. Durch das Messen des räumlichen Längsverlaufs des Bohrlochs 2 während des Bohrprozesses bzw. des fortschreitenden Eindringens des Bohrers 4 in das Werkstück 3 und das darauf abgestimmte Einwirken der Radialkraft 19 auf den Bohrkopf 5 des Bohrers 4 wird die sogenannte Mittenabweichung, d.h. die Abweichung des Bohrlochs 2 von dem idealen, geradlinigen Längsverlauf, möglichst gering gehalten. Selbstverständlich ist es aber auch möglich, mit dem Verfahren das Bohrloch 2 mit einem gekrümmten, d.h. nicht geradlinigen, räumlichen Längsverlauf herzustellen.

Die Ausführungsbeispiele zeigen mögliche Ausführungsvarianten der Vorrichtung 1 zum Bohren von tiefen Bohrlöchern 2, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mitumfasst.

Der Ordnung halber sei abschließend darauf hingewiesen, dass zum besseren Verständnis des Aufbaus der Vorrichtung 1 zum Bohren von tiefen Bohrlöchern 2 diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1; 2, 3; 4, 5; 6, 7; 8, 9, 10; 11; 12 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

**Bezugszeichenaufstellung**

| | | | |
|---|---|---|---|
| 1 | Vorrichtung | 56 | Austrittsöffnung |
| 2 | Bohrloch | 57 | Stirnseite |
| 3 | Werkstück | 58 | Mündungsachse |
| 4 | Bohrer | 59 | Sicke |
| 5 | Bohrkopf | 60 | Öffnungswinkel |
| | | | |
| 6 | Bohrerschaft | 61 | Bohrerseite |
| 7 | Bohrspindel | 62 | Zylindermantelfläche |
| 8 | Bohrfluidkreislauf | 63 | Rückversetzung |
| 9 | Bohrfluid | 64 | Zylindermantelteilfläche |
| 10 | Tank | 65 | Zylindermantelteilfläche |
| | | | |
| 11 | Pumpe | 66 | Länge L |
| 12 | Kanal | 67 | Flächennormale |
| 13 | Bohrspitze | 68 | Winkelhalbierende |
| 14 | Auffangbehälter | 69 | Winkel |
| 15 | Grobfilter | 70 | Breite |
| | | | |
| 16 | Feinfilter | 71 | Schneidenwinkel |
| 17 | Drehübergabe | 72 | Schneidenwinkel |
| 18 | Zuführleitung | 73 | Randabstand |
| 19 | Radialkraft | 74 | Endbereich |
| | | 75 | Krümmungsradius |
| 25 | Pulsleitung | | |
| | | 76 | Austrittsöffnung |
| 26 | Ventil | 77 | Oberflächenbereich |
| 27 | Bohrerachse | 78 | Mündungsachse |
| 28 | Drehgeber | 79 | Neigungswinkel |
| 29 | Steuereinrichtung | 80 | Zylindermantelfläche |
| 30 | Messvorrichtung | | |
| | | 91 | Bohrleitrohr |
| | | 92 | Bohrer |
| 31 | Messkopf | 93 | Bohrbuchsenschaft |
| 32 | Abstand | 94 | Bohrbuchse |
| 33 | Oberfläche | 95 | Bohrerführungsloch |
| 34 | Messkopfträger | | |
| 35 | Tiefe | 96 | Längsmittelachse |
| | | 97 | Achse |
| 36 | Ultraschallsender | 98 | Durchmesser |
| 37 | Ultraschellempfänger | 99 | Durchmesser |
| 38 | Drucksensor | 100 | Neigungswinkel |
| | | | |
| 51 | Durchmesser D | 105 | Element |
| 52 | Schneide | | |
| 53 | Schneidenabschnitt | 106 | Leitung |
| 54 | Schneidenabschnitt | 107 | Steuerelektronik |
| 55 | Schneidenspitze | 108 | Strahlendetektor |
| | | 109 | Anlageseite |
| | | 110 | Element |

## Patentansprüche

1. Bohrer (4) mit einem Bohrkopf (5) mit einem Durchmesser D (51), wobei der Bohrkopf (5) an einer Bohrerspitze (13) nur eine, sich über einen Teil des Durchmesser D (51) erstreckende Schneide (52) hat, und mit einer seitlichen, V-förmigen Spanabführungsnut bzw. Sicke (59) und mit einem Kanal (12) mit einer Austrittsöffnung (56) im Bohrkopf (5) für die Zuführung eines Bohrfluids (9), wobei an einer der Sicke (59) abgewandten Bohrerseite (61) des Bohrkopfs (5) zwischen einer ersten und einer zweiten Zylindermantelteilfläche (64, 65) des Bohrkopfs (5) eine den Querschnitt des Bohrkopfs (5) bezüglich einer einhüllenden Zylindermantelfläche (62) des Bohrkopfs (5) reduzierende Rückversetzung (63) ausgebildet ist, **dadurch gekennzeichnet, dass** die Rückversetzung (63) ebenflächig ausgebildet und in einem der Bohrerspitze (13) zugewandten Endbereich (74) des Bohrkopfs (5) angeordnet ist und sich in axialer Richtung erstreckt, und dass eine Flächennormale (67) der Rückversetzung (63) mit einer Winkelhalbierenden (68) der Sicke (59) einen Winkel (69) einschließt, wobei dieser Winkel (69) einen Wert aus einem Bereich von - 50 ° bis + 50 ° hat.

2. Bohrer nach Anspruch 1, **dadurch gekennzeichnet, dass** ein Verhältnis aus einer Länge des Bohrkopfs (5) zu dessen Durchmesser D (51) einen Wert aus einem Bereich von 0,5 bis 10 hat.

3. Bohrer nach Anspruch 2, **dadurch gekennzeichnet, dass** ein Verhältnis aus der Länge des Bohrkopfs (5) zu dessen Durchmesser D (51) einen Wert aus einem Bereich von 1 bis 4 hat.

4. Bohrer nach einem der Ansprüche 1 bis 3, **dadurch gekennzeichnet, dass** der Winkel (69) einen Wert aus einem Bereich von - 30 ° bis + 30 ° hat.

5. Bohrer nach einem der Ansprüche 1 bis 4, **dadurch gekennzeichnet, dass** die Rückversetzung (63) mit einer Breite (70) ausgebildet ist, wobei ein Verhältnis aus dem Durchmesser D (51) und der Breite (70) einen Wert aus einem Bereich von 0,1 bis 0,8 hat.

6. Bohrer nach einem der Ansprüche 1 bis 5, **dadurch gekennzeichnet, dass** die Rückversetzung (63) in Richtung auf die Bohrerspitze (13) hin durchgehend verlaufend ist.

7. Bohrer nach einem der Ansprüche 1 bis 6, **dadurch gekennzeichnet, dass** die Rückversetzung (63) bezüglich einer Bohrerachse (27) des Bohrkopfs (5) parallel ausgerichtet ist.

8. Bohrer nach einem der Ansprüche 1 bis 7, **dadurch gekennzeichnet, dass** zwei oder mehrere voneinander durch zwischenliegende Zylindermantelteilflächen (64, 65) distanzierte Rückversetzungen (63) ausgebildet sind.

9. Bohrer nach einem der Ansprüche 1 bis 8, **dadurch gekennzeichnet, dass** der Bohrkopf (5) mit einer Schneide (52) mit einem ersten Schneidenabschnitt (53) und mit einem zweiten Schneidenabschnitt (54) ausgebildet ist, wobei der erste Schneidenabschnitt (53) einer Bohrerachse (27) des Bohrkopfs (5) zugewandt ist und der zweite Schneidenabschnitt (54) der Bohrerachse (27) des Bohrkopfs (5) abgewandt ist, und der erste Schneidenabschnitt (53) mit der Bohrerachse (27) einen ersten Schneidenwinkel (71) von zumindest 70 ° einschließt.

10. Bohrer nach Anspruch 9, **dadurch gekennzeichnet, dass** der erste Schneidenwinkel (71) einen Wert von zumindest 80 ° hat.

11. Bohrer nach Anspruch 9 oder 10, **dadurch gekennzeichnet, dass** der zweite Schneidenabschnitt (54) mit der Bohrerachse (27) einen zweiten Schneidenwinkel (71) einschließt, wobei der zweite Schneidenwinkel (71) einen Wert aus einem Bereich von 20 ° bis 90 ° hat.

12. Bohrer nach Anspruch 11, **dadurch gekennzeichnet, dass** der zweite Schneidenwinkel (71) einen Wert aus einem Bereich von 35 ° bis 80 ° hat.

13. Bohrer nach einem der Ansprüche 9 bis 12, **dadurch gekennzeichnet, dass** eine durch die beiden Schneidenabschnitte (53, 54) gebildete Schneidenspitze (55) einen minimalen Randabstand (73) bezüglich einer einhüllenden Zylindermantelfläche (62) des Bohrkopfs (5) hat, der einen Wert aus einem Bereich von 1/10 bis 1/3 des Durchmessers D (51) hat.

14. Bohrer nach Anspruch 13, **dadurch gekennzeichnet, dass** der Randabstand (73) einen Wert aus einem Bereich von 1/5 bis 1/4 des Durchmessers D (51) hat.

15. Bohrer nach einem der Ansprüche 9 bis 14, **dadurch gekennzeichnet, dass** ein der Bohrerachse (27) des Bohrkopfs (5) bzw. ein der Schneidenspitze (55) abgewandter Endbereich (74) des zweiten Schneidenabschnitts (54) zur einhüllenden Zylindermantelfläche (62) des Bohrkopfs (5) hin abgerundet ausgebildet ist.

16. Bohrer nach Anspruch 15, **dadurch gekennzeichnet, dass** der der Schneidenspitze (55) abgewandte Endbereich (74) des zweiten Schneidenabschnitts (54) einen Krümmungsradius (75) mit einem Wert von bis zu ½ des Durchmessers D (51) hat.

17. Bohrer nach einem der Ansprüche 1 bis 16, **dadurch gekennzeichnet, dass** der Durchmessers D (51) des Bohrkopfs (5) einen Wert aus einem Bereich von 3 mm bis 40 mm hat.

18. Bohrer nach einem der Ansprüche 1 bis 17, **dadurch gekennzeichnet, dass** der Durchmessers D (51) des Bohrkopfs (5) einen Wert aus einem Bereich von 4 mm bis 20 mm hat.

19. Bohrer nach einem der Ansprüche 1 bis 18, **dadurch gekennzeichnet, dass** eine zweite Austrittsöffnung (76) in einem durch die Rückversetzung (63) gebildeten Oberflächenbereich (77) des Bohrkopfs (5) angeordnet ist.

20. Bohrer nach Anspruch 19, **dadurch gekennzeichnet, dass** eine Mündungsachse (58) der zweiten Austrittsöffnung (76) bezüglich der Flächennormalen (67) der Rückversetzung (63) geneigt ist.

21. Bohrer nach Anspruch 20, **dadurch gekennzeichnet, dass** ein Neigungswinkel (79) der Mündungsachse (58) bezüglich der Flächennormalen (67) der Rückversetzung (63) einen Wert aus einem Bereich von 0 ° bis 80 ° hat.

22. Bohrer nach Anspruch 20, **dadurch gekennzeichnet, dass** der Neigungswinkel (79) der Mündungsachse (58) einen Wert aus einem Bereich von 30 ° bis 60 ° hat.

23. Bohrer nach Anspruch 22, **dadurch gekennzeichnet, dass** die zweite Austrittsöffnung (76) in einem der Bohrerspitze (13) näher gelegenen Bereich des Bohrkopfs (5) liegt und eine weitere Austrittsöffnung (56) in einem durch die Sicke (59) gebildeten Oberflächenbereich (77) des Bohrkopfs (5) angeordnet ist, wobei diese weitere Austrittsöffnung (56) in einem von der Bohrerspitze (13) weiter entfernt gelegenen Bereich des Bohrkopfs (5) liegt.

24. Bohrer nach einem der Ansprüche 1 bis 18, **dadurch gekennzeichnet, dass** die an der der Sicke (59) abgewandten Bohrerseite (61) des Bohrkopfs (5) bzw. in der Rückversetzung (63) ein piezoelektrisches Element (105) angeordnet ist.

25. Bohrer nach Anspruch 24, **dadurch gekennzeichnet, dass** das piezoelektrisches Element (105) mit einer Anlageseite (109) ausgebildet ist, wobei die Anlageseite (109) mit der einhüllenden Zylindermantelfläche (62) des Bohrkopfs (5) fluchtend ausgebildet ist.

26. Vorrichtung (1) zum Bohren eines Bohrlochs (2) in einem Werkstück (3) mit einem Durchmesser D (51) eines Bohrers (4) und einer Tiefe (35) des Bohrlochs (2), wobei das Verhältnis von Tiefe (35) zu Durchmesser D (51) größer ist als 100, mit einer Bohrspindel (7) und mit einem Bohrer (4) umfassend einen Bohrkopf (5), einen Bohrerschaft (6) und einen Kanal (12) für die Zuführung eines Bohrfluids (9) und mit einem Bohrfluidkreislauf (8) für das Bohrfluid (9), wobei der Bohrfluidkreislauf (8) zumindest eine Pumpe (11) und eine Zuführleitung (18) umfasst und mit einer Drehübergabe (17) an der Bohrspindel (7) zur Zuführung des Bohrfluids (9) in den Kanal (12) des Bohrers (4), **dadurch gekennzeichnet, dass** die Vorrichtung (1) einen Bohrer (4) gemäß einem der Ansprüche 1 bis 23 umfasst.

27. Vorrichtung nach Anspruch 26, **dadurch gekennzeichnet, dass** der Bohrfluidkreislauf (8) eine Pulsleitung (25) mit einem Ventil (26) umfasst, wobei die Pulsleitung (25) unmittelbar vor der Drehübergabe (17) von der Zuführleitung (18) abzweigt.

28. Vorrichtung nach Anspruch 27, **dadurch gekennzeichnet, dass** das Ventil (26) durch ein Servoventil gebildet ist.

29. Vorrichtung nach einem der Ansprüche 26 bis 28, **dadurch gekennzeichnet, dass** der Bohrfluidkreislauf (8) eine Filtereinrichtung mit einem Grobfilter (15) und/oder einem Feinfilter (16) für das Bohrfluid (9) umfasst.

30. Vorrichtung nach einem der Ansprüche 27 bis 29, **dadurch gekennzeichnet, dass** zumindest die Zuführleitung (18) und/oder die Pulsleitung (25) des Bohrfluidkreislaufs (8) durch Leitungen (106) mit einer hohen Stabilität gegenüber einer radialen und gegenüber einer longitudinalen Dehnung ausgebildet sind.

31. Vorrichtung nach einem der Ansprüche 26 bis 30, **dadurch gekennzeichnet, dass** der Bohrfluidkreislauf (8) für einen Druck des Bohrfluids (9) aus einem Bereich von bis zu 60 bar ausgebildet ist.

32. Vorrichtung nach Anspruch 31, **dadurch gekennzeichnet, dass** der Bohrfluidkreislauf (8) für einen Druck des Bohrfluids (9) aus einem Bereich von bis zu 160 bar ausgebildet ist.

33. Vorrichtung nach Anspruch 31, **dadurch gekennzeichnet, dass** der Bohrfluidkreislauf (8) für einen Druck des Bohrfluids (9) aus einem Bereich von bis zu 300 bar ausgebildet ist.

34. Vorrichtung nach Anspruch 31, **dadurch gekennzeichnet, dass** der Bohrfluidkreislauf (8) für einen Druck des Bohrfluids (9) aus einem Bereich von bis zu 600 bar ausgebildet ist.

35. Vorrichtung nach Anspruch 31, **dadurch gekennzeichnet, dass** der Bohrfluidkreislauf (8) für einen Druck des Bohrfluids (9) aus einem Bereich von bis zu 4000 bar ausgebildet ist.

36. Vorrichtung nach Anspruch 31, **dadurch gekennzeichnet, dass** der Bohrfluidkreislauf (8) für einen Druck des Bohrfluids (9) aus einem Bereich von mehr als 4000 bar ausgebildet ist.

37. Vorrichtung nach einem der Ansprüche 26 bis 36, **dadurch gekennzeichnet, dass** diese einen Drehgeber (28) zur Messung der Drehzahl bzw. der Winkelgeschwindigkeit des Bohrers (4) und der momentanen Stellung einer Schneide (52) des Bohrers (4) umfasst.

38. Vorrichtung nach einem der Ansprüche 26 bis 37, **dadurch gekennzeichnet, dass** eine Messvorrichtung (30) zur Messung des räumlichen Längsverlaufs des Bohrloches (2) ausgebildet ist.

39. Vorrichtung nach Anspruch 37 und 38, **dadurch gekennzeichnet, dass** eine Steuereinrichtung (29), die mit dem Drehgeber (28), mit der Messvorrichtung (30) und mit dem Ventil (26) verbunden ist, ausgebildet ist.

40. Vorrichtung nach einem der Ansprüche 26 bis 39, **dadurch gekennzeichnet, dass** die Messvorrichtung (30) einen Messkopfträger (34) zur Veränderung der räumlichen Lage und der Ausrichtung eines Messkopfs (31) umfasst.

41. Vorrichtung nach Anspruch 40, **dadurch gekennzeichnet, dass** die Messvorrichtung (30) eine Positionsmesseinrichtung zur Messung der räumlichen Lage des Messkopfträgers bzw. des Messkopfs (31) umfasst.

42. Vorrichtung nach Anspruch 40 oder 41, **dadurch gekennzeichnet, dass** an dem Messkopfträger zumindest ein Ultraschallsender (36) und zumindest einen Ultraschallempfänger (37) angeordnet sind.

43. Vorrichtung nach Anspruch 42, **dadurch gekennzeichnet, dass** der Ultraschallsender (36) und der Ultraschallempfänger (37) in einem gemeinsamen Ultraschallmesskopf angeordnet sind.

44. Vorrichtung nach einem der Ansprüche 40 bis 41, **dadurch gekennzeichnet, dass** an dem Messkopfträger (34) ein Strahlendetektor (108) zur Messung elektromagnetischer Strahlung und in dem Bohrkopf (5) ein elektromagnetische Strahlung emittierendes Element (110) angeordnet ist.

45. Vorrichtung nach Anspruch 44, **dadurch gekennzeichnet, dass** der Strahlendetektor (108) zumindest zur Messung der Intensität von Gammastrahlung ausgebildet ist und das Element (110) durch ein Stück eines Gammastrahlung emittierenden chemischen Elements gebildet ist.

46. Vorrichtung nach einem der Ansprüche 26 bis 45, **dadurch gekennzeichnet, dass** diese ein Bohrleitrohr (91) mit einer Bohrbuchse (94) und einem Bohrbuchsenschaft (93) umfasst, wobei in der Bohrbuchse (94) ein exzentrisch angeordnetes Bohrerführungsloch (95) ausgebildet ist.

47. Vorrichtung nach Anspruch 46, **dadurch gekennzeichnet, dass** das Bohrerführungsloch (95) bezüglich einer Längsmittelachse (96) der Bohrbuchse (94) schräg ausgerichtet ist.

48. Vorrichtung nach Anspruch 46 oder 47, **dadurch gekennzeichnet, dass** eine Achse (97) des Bohrerführungslochs (95) und die Längsmittelachse (96) der Bohrbuchse (94) einen Neigungswinkel (79) einschließen, dessen Wert aus einem Bereich zwischen 0 ° und 5 ° gewählt ist.

49. Vorrichtung nach Anspruch 48, **dadurch gekennzeichnet, dass** der Neigungswinkel (79) zwischen der Achse (97) des Bohrerführungslochs (95) und der Längsmittelachse (96) der Bohrbuchse (94) aus einem Bereich zwischen 0,5 ° und 1,5 ° gewählt ist.

50. Vorrichtung zum Bohren eines Bohrlochs (2) in einem Werkstück (3) mit einem Durchmesser D (51) eines Bohrers (4) und einer Tiefe (35) des Bohrlochs (2), wobei das Verhältnis von Tiefe (35) zu Durchmesser D (51) größer ist als 100, mit einer Bohrspindel (7) und mit einem Bohrer (4) umfassend einen Bohrkopf (5), einen Bohrerschaft (6) und einen Kanal (12) für die Zuführung eines Bohrfluids (9) und mit einem Bohrfluidkreislauf (8) für das Bohrfluid (9), wobei der Bohrfluidkreislauf (8) zumindest eine Pumpe (11) und eine Zuführleitung (18) umfasst und mit einer Drehübergabe (17) an der Bohrspindel (7) zur Zuführung des Bohrfluids (9) in den Kanal (12) des Bohrers (4), **dadurch gekennzeichnet, dass** die Vorrichtung (1) einen Bohrer (4) gemäß einem der Ansprüche 24 oder 25 umfasst.

51. Vorrichtung nach Anspruch 50, **dadurch gekennzeichnet, dass** diese einen Drehgeber (28) zur Messung der Drehzahl bzw. der Winkelgeschwindigkeit des Bohrers (4) und der momentanen Stellung einer Schneide (52) des Bohrers (4) umfasst.

52. Vorrichtung nach Anspruch 50 oder 51, dass eine Messvorrichtung (30) zur Messung des räumlichen Längsverlaufs des Bohrloches (2) ausgebildet ist.

53. Vorrichtung nach einem der Ansprüche 51 und 52, **dadurch gekennzeichnet, dass** eine Steuereinrichtung (29), die mit dem Drehgeber (28) und mit der Messvorrichtung (30) verbunden ist, ausgebildet ist.

54. Vorrichtung nach einem der Ansprüche 50 bis 53, **dadurch gekennzeichnet, dass** die Messvorrichtung (30) einen Messkopfträger (34) zur Veränderung der räumlichen Lage und der Ausrichtung eines Messkopfs (31) umfasst.

55. Vorrichtung nach Anspruch 54, **dadurch gekennzeichnet, dass** die Messvorrichtung (30) eine Positionsmesseinrichtung zur Messung der räumlichen Lage des Messkopfträgers (34) bzw. des Messkopfs (31) umfasst.

56. Vorrichtung nach Anspruch 54 oder 55, **dadurch gekennzeichnet, dass** an dem Messkopfträger (34)zumindest ein Ultraschallsender (36) und zumindest einen Ultraschallempfänger (37) angeordnet sind.

57. Vorrichtung nach Anspruch 56, **dadurch gekennzeichnet, dass** der Ultraschallsender (36) und der Ultraschallempfänger (37) in einem gemeinsamen Ultraschallmesskopf angeordnet sind.

58. Vorrichtung nach Anspruch 54 oder 55, **dadurch gekennzeichnet, dass** an dem Messkopfträger (34) ein Strahlendetektor (108) zur Messung elektromagnetischer Strahlung und in dem Bohrkopf (5) ein elektromagnetische Strahlung emittierendes Element (110) angeordnet ist.

59. Vorrichtung nach Anspruch 58, **dadurch gekennzeichnet, dass** der Strahlendetektor (108) zumindest zur Messung der Intensität von Gammastrahlung ausgebildet ist und das Element (110) durch ein Stück eines Gammastrahlung emittierenden chemischen Elements gebildet ist.

60. Vorrichtung nach einem der Ansprüche 50 bis 59, **dadurch gekennzeichnet, dass** diese ein Bohrleitrohr (91) mit einer Bohrbuchse (94) und einem Bohrbuchsenschaft (93) umfasst, wobei in der Bohrbuchse (94) ein exzentrisch angeordnetes Bohrerführungsloch (95) ausgebildet ist.

61. Vorrichtung nach einem der Ansprüche 50 bis 60, **dadurch gekennzeichnet, dass** das Bohrerführungsloch (95) bezüglich einer Längsmittelachse (96) der Bohrbuchse (94) schräg ausgerichtet ist.

62. Vorrichtung nach einem der Ansprüche 50 bis 61, **dadurch gekennzeichnet, dass** eine Achse (97) des Bohrerführungslochs (95) und die Längsmittelachse (96) der Bohrbuchse (94) einen Neigungswinkel (79) einschließen, dessen Wert aus einem Bereich zwischen 0 ° und 5 ° gewählt ist.

63. Vorrichtung nach einem der Ansprüche 50 bis 62, **dadurch gekennzeichnet, dass** der Neigungswinkel (79) zwischen der Achse des Bohrerführungslochs (95) und der Längsmittelachse (96) der Bohrbuchse (94) aus einem Bereich zwischen 0,5 ° und 1,5 ° gewählt ist.

## Claims

1. Drill (4) with a drill head (5) with a diameter D (51), in which the drill head (5) on a drill tip (13) has only one cutting edge (52) extending over part of the diameter D (51), and with a lateral, V-shaped chip removing groove or bead (59) and with a channel (12) with an outlet opening (56) in the drill head (5) for a supplying a drill fluid (9), and on a drill side (61) of the drill head (5) facing away from the bead (59) between a first and a second cylinder casing part surface (64, 65) of the drill head (5) there is a rear offset (63) reducing the cross section of the drill head (5) relative to an enclosing cylinder casing surface (62) of the drill head (5), **characterized in that** the rear offset (63) is designed to have an even surface and is arranged in an end section (74) of the drill head (5) facing the drill tip (13), and extends in axial direction, and that a normal to the surface (67) of the rear offset (63) with an angle bisector (68) of the bead (59) encloses an angle (69), and said angle (69) has a value from a range of - 50° to +50°.

2. Drill according to claim 1, **characterized in that** a ratio of a length of the drill head (5) to its diameter D (51) has a value from a range of 0.5 to 10.

3. Drill according to claim 2, **characterized in that** the ratio of the length of the drill head (5) to its diameter D (51) has a value from a range of 1 to 4.

4. Drill according to one of claims 1 to 3, **characterized in that** the angle (69) has a value from a range of from - 30° to + 30°.

5. Drill according to one of claims 1 to 4, **characterized in that** the rear offset (63) has a width (70), and the ratio of the diameter D (51) and the width (70) having a value from a range of 0.1 to 0.8.

6. Drill according to one of claims 1 to 5, **characterized in that** the rear offset (63) runs continuously in the direction of the drill tip (13).

7. Drill according to one of claims 1 to 6, **characterized in that** the rear offset (63) is aligned parallel in relation to a drill axis (27) of the drill head (5).

8. Drill according to one of claims 1 to 7, **characterized in that** two or more rear offsets (63) are formed spaced apart from one another by interlying cylinder casing part surfaces (64, 65).

9. Drill according to one of claims 1 to 8, **characterized in that** the drill head (5) is designed to have a cutting edge (52) with a first cutting edge section (53) and with a second cutting edge section (54), and the first cutting edge section (53) facing a drill axis (27) of the drill head (5) and the second cutting edge section (54) facing away from the drill axis (27) of the drill head (5), and the first cutting edge section (53) with the drill axis (27) encloses a first cutting edge angle (71) of at least 70°.

10. Drill according to claim 9, **characterized in that** the first cutting edge angle (71) is at least 80°.

11. Drill according to claim 9 or 10, **characterized in that** the second cutting edge section (54) with the drill axis (27) encloses a second cutting edge angle (71), and the second cutting edge angle (71) having a value from a range of 20° to 90°.

12. Drill according to claim 11, **characterized in that** the second cutting edge angle (71) has a value from a range of 35° to 80°.

13. Drill according to one of claims 9 to 12, **characterized in that** a cutting edge tip (55) formed by the two cutting edge sections (53, 54) has a minimal edge distance (73) relative to an enclosing cylinder casing surface (62) of the drill head (5), which has a value from a range of 1/10 to 1/3 of diameter D (51).

14. Drill according to claim 13, **characterized in that** the edge distance (73) has a value from a range of 1/5 to 1/4 of the diameter D (51).

15. Drill according to one of claims 9 to 14, **characterized in that** an end region (74) of the second cutting edge section (54) facing away from the drill axis (27) of the drill head (5) or the cutting edge tip (55) is designed to be rounded towards the enclosing cylinder casing surface (62) of the drill head (5).

16. Drill according to claim 15, **characterized in that** the end region (74) of the second cutting edge section (54) facing away from the cutting edge tip (55) has a radius of curvature (75) of up to ½ the diameter D (51).

17. Drill according to one of claims 1 to 16, **characterized in that** the diameter D (51) of the drill head (5) has a value from a range of 3 mm to 40 mm.

18. Drill according to one of claims 1 to 17, **characterized in that** the diameter D (51) of the drill head (5) has a value from a range of 4 mm to 20 mm.

19. Drill according to one of claims 1 to 18, **characterized in that** a second outlet opening (76) is arranged in a surface area (77) of the drill head (5) formed by the rear offset (63).

20. Drill according to claim 19, **characterized in that** an opening axis (58) of the second outlet opening (76) is inclined in relation to the normal to the surface (67) of the rear offset (63).

21. Drill according to claim 20, **characterized in that** an angle of inclination (79) of the opening axis (58) relative to the normal to surface (67) of the rear offset (63) has a value from a range of 0° to 80°.

22. Drill according to claim 20, **characterized in that** the angle of inclination (79) of the opening axis (58) has a value from a range of 30° to 60°.

23. Drill according to claim 22, **characterized in that** the second outlet opening (76) is in an area of the drill head (5) closer to the drill tip (13) and a further outlet opening (56) is arranged in a surface area (77) of the drill head (5) formed by the bead (59), and said further outlet opening (56) lying in a region of the drill head (5) positioned further away from the drill tip (13).

24. Drill according to one of claims 1 to 18, **characterized in that** on the drill side (61) of the drill head (5) facing away from the bead (59) or in the rear offset (63) a piezoelectric element (105) is arranged.

25. Drill according to claim 24, **characterized in that** the piezoelectric element (105) is designed to have a bearing side (109), and the bearing side (109) being designed to be in alignment with the enclosing cylinder casing surface (62) of the drill head (5).

26. Device (1) for drilling a borehole (2) in a workpiece (3) with a diameter D (51) of a drill (4) and a depth (35) of the borehole (2), and the ratio of the depth (35) to the diameter D (51) being greater than 100, with a drill spindle (7) and with a drill (4) comprising a drill head (5), a drill shaft (6) and a channel (12) for supplying a drill fluid (9) and with a drill fluid circuit (8) for the drill fluid (9), and the drill fluid circuit (8) comprising at least one pump (11) and a supply line (18), and with a rotary transfer (17) on the drill spindle (7) for supplying the drill fluid (9) into the channel (12) of the drill (4), **characterized in that** the device (1) comprises a drill (4) according to one of claims 1 to 23.

27. Device according to claim 26, **characterized in that** the drill fluid circuit (8) comprises a pulse line (25) with a valve (26), and the pulse line (25) branching off from the supply line (18) immediately prior to rotary transfer (17).

28. Device according to claim 27, **characterized in that** the valve (26) is in the form of a servovalve.

29. Device according to one of claims 26 to 28, **characterized in that** the drill fluid circuit (8) comprises a filter device with a coarse filter (15) and/or a fine filter (16) for the drill fluid (9).

30. Device according to one of claims 27 to 29, **characterized in that** at least the supply line (18) and/or the pulse line (25) of the drill fluid circuit (8) are formed by lines (106) with high resistance to a radial and longitudinal extension.

31. Device according to one of claims 26 to 30, **characterized in that** the drill fluid circuit (8) is designed for drill fluid (9) pressure in the region of up to 60 bar.

32. Device according to claim 31, **characterized in that** the drill fluid circuit (8) is designed for drill fluid (9) pressure in the region of up to 160 bar.

33. Device according to claim 31, **characterized in that** the drill fluid circuit (8) is designed for drill fluid (9) pressure in the region of up to 300 bar.

34. Device according to claim 31, **characterized in that** the drill fluid circuit (8) is designed for drill fluid (9) pressure in the region of up to 600 bar.

35. Device according to claim 31, **characterized in that** the drill fluid circuit (8) is designed for drill fluid (9) pressure in the region of up to 4,000 bar.

36. Device according to claim 31, **characterized in that** the drill fluid circuit (8) is designed for drill fluid (9) pressure in the region of more than 4,000 bar.

37. Device according to one of claims 26 to 36, **characterized in that** the latter comprises a rotary sensor (28) for measuring the rotational speed or the angular speed of the drill (4) and the current position of a cutting edge (52) of the drill (4).

38. Device according to one of claims 26 to 37, **characterized in that** a measuring device (30) is provided for measuring the longitudinal dimension of the borehole (2).

39. Device according to claim 37 and 38, **characterized in that** it includes a control device (29), which is connected to the rotary sensor (28), the measuring device (30) and the valve (26).

40. Device according to one of claims 26 to 39, **characterized in that** the measuring device (30) comprises a measuring head support (34) for changing the spatial position and the alignment of a measuring head (31).

41. Device according to claim 40, **characterized in that** the measuring device (30) comprises a position measuring device for measuring the spatial position of the measuring head support and the measuring head (31).

42. Device according to claim 40 or 41, **characterized in that** on the measuring head support at least one ultrasound transmitter (36) and at least one ultrasound receiver (37) are arranged.

43. Device according to claim 42, **characterized in that** the ultrasound transmitter (36) and the ultrasound receiver (37) are arranged in a common ultrasound measuring head.

44. Device according to one of claims 40 to 41, **characterized in that** on the measuring head support (34) a radiation detector (108) is arranged for measuring electromagnetic radiation, and in the drill head (5) an element (110) emitting electromagnetic radiation is arranged.

45. Device according to claim 44, **characterized in that** the radiation detector (108) is designed at least for measuring the intensity of gamma radiation, and the element (110) is formed by a piece of a chemical element emitting gamma radiation.

46. Device according to one of claims 26 to 45, **characterized in that** the latter comprises a drill pipe (91) with a drill bush (94) and drill bush shaft (93), and an eccentrically arranged drill guiding hole (95) being formed the drill bush (94).

47. Device according to claim 46, **characterized in that** the drill guiding hole (95) is inclined relative to a longitudinal middle axis (96) of the drill bush (94).

48. Device according claim 46 or 47, **characterized in that** an axis (97) of the drill guiding hole (95) and the longitudinal middle axis (96) of the drill bush (94) enclose an angle of inclination (79), the value of which is selected from a range of between 0° and 5°.

49. Device according to claim 48, **characterized in that** the angle of inclination (79) between the axis (97) of the drill guiding hole (95) and the longitudinal middle axis (6) of the drill bush (94) is selected from a range of between 0.5° and 1.5°.

50. Device for drilling a borehole (2) in a workpiece (3) with a diameter D (51) of a drill (4) and a depth (35) of the borehole (2), and the ratio of depth (35) to diameter D (51) being greater than 100, with a drill spindle (7) and a drill (4) comprising a drill head (5), a drill shaft (6) and a channel (12) for supplying drill fluid (9), and with a drill fluid circuit (8) for the drill fluid (9), and the drill fluid circuit (8) comprising at least one pump (11) and a supply line (18), and with a rotary transfer (17) on the drill spindle (7) for supplying drill fluid (9) into the channel (12) of the drill (4), **characterized in that** the device (1) comprises a drill (4) according to one of claims 24 or 25.

51. Device according to claim 50, **characterized in that** the latter comprises a rotary sensor (28) for measuring the speed or the angular speed of the drill (4) and the current position of a cutting edge (52) of the drill (4).

52. Device according to claim 50 or 51, **characterized in that** a measuring device (30) is designed to measure the longitudinal dimension of the borehole (2).

53. Device according to one of claims 51 and 52, **characterized in that** it includes a control device (29), which is connected with the rotary sensor (28) and the measuring device (30).

54. Device according to one of claims 50 to 53, **characterized in that** the measuring device (30) comprises a measuring head support (34) for changing the spatial position and the alignment of a measuring head (31).

55. Device according to claim 54, **characterized in that** the measuring device (30) comprises a position measuring device for measuring the spatial position of the measuring head support (34) or the measuring head (31).

56. Device according to claim 54 or 55, **characterized in that** on the measuring head support (34) at least one ultrasound transmitter (36) and at least one ultrasound receiver (37) are arranged.

57. Device according to claim 56, **characterized in that** the ultrasound transmitter (36) and the ultrasound receiver (37) are arranged in a common ultrasound measuring head.

58. Device according to claim 54 or 55, **characterized in that** on the measuring head support (34) a radiation detector (108) is arranged for measuring electromagnetic radiation and in the drill head (5) an element (110) emitting electromagnetic radiation is arranged.

59. Device according to claim 58, **characterized in that** the radiation detector (108) is designed at least for measuring the intensity of gamma radiation and the element (110) is formed by a piece of a chemical element emitting gamma radiation.

60. Device according to one of claims 50 to 59, **characterized in that** the latter comprises a drill pipe (91) with a drill bush (94) and drill bush shaft (93), and an eccentrically arranged drill guiding hole (95) being formed in the drill bush (94).

61. Device according to one of claims 50 to 60, **characterized in that** the drill guiding hole (95) is aligned to be inclined relative to a longitudinal middle axis (96) of the drill bush (94).

62. Device according to one of claims 50 to 61, **characterized in that** an axis (97) of the drill guiding hole (95) and the longitudinal middle axis (96) of the drill bush (94) enclose an angle of inclination (79) which is selected from a range of between 0° and 5°.

63. Device according to one of claims 50 to 62, **characterized in that** the angle of inclination (79) between the axis of the drill guiding hole (5) and the longitudinal middle axis (96) of the drill bush (94) is selected from a range of between 0.5° and 1.5°.

## Revendications

1. Foret (4) comportant une tête de perçage (5) avec un diamètre D (51), ladite tête de perçage (5) ayant sur une pointe de foret (13) seulement un tranchant (52) qui s'étend sur une partie du diamètre D (51), et comportant une rainure d'évacuation des copeaux ou nervure (59) latérale en forme de V et comportant un canal (12) avec une ouverture de sortie (56) dans la tête de perçage (5) pour l'admission d'un fluide de perçage (9), un retrait (63), qui réduit la section transversale de la tête de perçage (5) par rapport à une paroi latérale cylindrique (62) enveloppante de la tête de perçage (5), étant réalisé sur un côté (61) de la tête de perçage (5), détourné de la nervure (59), entre une première et une deuxième portion de paroi latérale cylindrique (64, 65), **caractérisé en ce que** ledit retrait (63) est réalisé avec une surface plane et est disposé sur la tête de perçage (5) dans une zone d'extrémité (74) orientée vers la pointe de foret (13) et s'étend dans la direction axiale, et **en ce qu'**une normale (67) de la surface du retrait (63) forme un angle (69) avec une bissectrice (68) de la nervure (59), ledit angle (69) ayant une valeur choisie dans une plage de -50° à +50°.

2. Foret selon la revendication 1, **caractérisé en ce qu'**un rapport entre la longueur de la tête de perçage (5) et le diamètre D (51) de celle-ci a une valeur choisie dans une plage de 0,5 à 10.

3. Foret selon la revendication 2, **caractérisé en ce qu'**un rapport entre la longueur de la tête de perçage (5) et le diamètre D (51) de celle-ci a une valeur choisie dans une plage de 1 à 4.

4. Foret selon l'une quelconque des revendications 1 à 3, **caractérisé en ce que** l'angle (69) a une valeur choisie dans une plage de -30° à +30°.

5. Foret selon l'une quelconque des revendications 1 à 4, **caractérisé en ce que** le retrait (63) est réalisé avec une largeur (70), un rapport entre le diamètre D (51) et la largeur (70) ayant une valeur choisie dans une plage de 0,1 à 0,8.

6. Foret selon l'une quelconque des revendications 1 à 5, **caractérisé en ce que** le retrait (63) s'étend en continu vers la pointe de foret (13).

7. Foret selon l'une quelconque des revendications 1 à 6, **caractérisé en ce que** le retrait (63) est orienté parallèlement à un axe (27) de la tête de perçage (5).

8. Foret selon l'une quelconque des revendications 1 à 7, **caractérisé en ce que** deux ou plusieurs retraits (63) sont réalisés en étant espacés par des portions de paroi latérale cylindrique (64, 65) intercalées.

9. Foret selon l'une quelconque des revendications 1 à 8, **caractérisé en ce que** la tête de perçage (5) est réalisée avec un tranchant (52) comportant une première partie de tranchant (53) et une deuxième partie de tranchant (54), ladite première partie de tranchant (53) étant orientée vers un axe (27) de la tête de perçage (5) et ladite deuxième partie de tranchant (54) étant détournée de l'axe (27) de la tête de perçage (5), et la première partie de tranchant (53) formant avec l'axe (27) un premier angle de tranchant (71) d'au moins 70°.

10. Foret selon la revendication 9, **caractérisé en ce que** le premier angle de tranchant (71) a une valeur d'au moins 80°.

11. Foret selon la revendication 9 ou 10, **caractérisé en ce que** la deuxième partie de tranchant (54) forme avec l'axe (27) un deuxième angle de tranchant (71), ledit deuxième angle de tranchant (71) ayant une valeur choisie dans une plage de 20° à 90°.

12. Foret selon la revendication 11, **caractérisé en ce que** le deuxième angle de tranchant (71) a une valeur choisie dans une plage de 35° à 80°.

13. Foret selon l'une quelconque des revendications 9 à 12, **caractérisé en ce qu'**une extrémité de tranchant (55), formée par les deux parties de tranchant (53, 54), est située par rapport à une paroi latérale cylindrique (62) enveloppante de la tête de perçage (5) à une distance au bord (73) minimale ayant une valeur choisie dans une plage de 1/10 à 1/3 du diamètre D (51).

14. Foret selon la revendication 13, **caractérisé en ce que** la distance au bord (73) a une valeur choisie dans une plage de 1/5 à 1/4 du diamètre D (51).

15. Foret selon l'une quelconque des revendications 9 à 14, **caractérisé en ce qu'**une zone d'extrémité (74) de la deuxième partie de tranchant (54), laquelle est détournée de l'axe (27) de la tête de perçage (5) ou de l'extrémité de tranchant (55), est arrondie en direction de la paroi latérale cylindrique (62) enveloppante de la tête de perçage (5).

16. Foret selon la revendication 15, **caractérisé en ce que** la zone d'extrémité (74) de la deuxième partie de tranchant (54), laquelle est détournée de l'extrémité de tranchant (55), a un rayon de courbure (75) avec une valeur allant au maximum jusqu'à 1/2 du diamètre D (51).

17. Foret selon l'une quelconque des revendications 1 à 16, **caractérisé en ce que** le diamètre D (51) de la tête de perçage (5) a une valeur choisie dans une plage de 3 mm à 40 mm.

18. Foret selon l'une quelconque des revendications 1 à 17, **caractérisé en ce que** le diamètre D (51) de la tête de perçage (5) a une valeur choisie dans une plage de 4 mm à 20 mm.

19. Foret selon l'une quelconque des revendications 1 à 18, **caractérisé en ce qu'**une deuxième ouverture de sortie (76) est disposée dans une zone de surface (77), formée par le retrait (63), de la tête de perçage (5).

20. Foret selon la revendication 19, **caractérisé en ce qu'**un axe d'embouchure (58) de la deuxième ouverture de sortie (76) est incliné par rapport à la normale (67) de la surface du retrait (63).

21. Foret selon la revendication 20, **caractérisé en ce qu'**un angle d'inclinaison (79) entre l'axe d'embouchure (58) et la normale (67) de la surface du retrait (63) a une valeur choisie dans une plage de 0° à 80°.

22. Foret selon la revendication 20, **caractérisé en ce que** l'angle d'inclinaison (79) de l'axe d'embouchure (58) a une valeur choisie dans une plage de 30° à 60°.

23. Foret selon la revendication 22, **caractérisé en ce que** la deuxième ouverture de sortie (76) est située dans une zone de la tête de perçage (5) plus proche de la pointe de foret (13), et une autre ouverture de sortie (56) est située dans une zone de surface (77) de la tête de perçage (5), formée par la nervure (59), ladite autre ouverture de sortie (56) étant située dans une zone de la tête de perçage (5), plus éloignée de la pointe de foret (13).

24. Foret selon l'une quelconque des revendications 1 à 18, **caractérisé en ce qu'**un élément piézoélectrique (105) est disposé sur la tête de perçage (5) sur le côté (61) détourné de la nervure (59) ou dans le retrait (63).

25. Foret selon la revendication 24, **caractérisé en ce que** l'élément piézoélectrique (105) est réalisé avec un côté d'appui (109), ledit côté d'appui (109) étant réalisé à fleur de la paroi latérale cylindrique (62) enveloppante de la tête de perçage (5).

26. Dispositif (1) permettant de percer une forure (2) dans une pièce (3) avec un diamètre D (51) d'un foret (4) et une profondeur (35) de la forure (2), le rapport entre la profondeur (35) et le diamètre D (51) étant supérieur à 100, comportant une broche de perçage (7) et comportant un foret (4) constitué par une tête de perçage (5), une tige de foret (6) et un canal (12) pour l'admission d'un fluide de perçage (9), et comportant un circuit (8) pour le fluide de perçage (9), ledit circuit (8) étant muni d'au moins une pompe (11) et d'une conduite d'admission (18), et comportant un dispositif de transmission de rotation (17) à la broche de perçage (7) pour acheminer le fluide de perçage (9) dans le canal (12) du foret (4), **caractérisé en ce que** ledit dispositif (1) comporte un foret (4) selon l'une quelconque des revendications 1 à 23.

27. Dispositif selon la revendication 26, **caractérisé en ce que** le circuit (8) pour fluide de perçage comporte une conduite pulsée (25) avec une valve (26), ladite conduite pulsée (25) bifurquant de la conduite d'admission (18) directement en amont du dispositif de transmission de rotation (17).

28. Dispositif selon la revendication 27, **caractérisé en ce que** la valve (26) est formée par une servovalve.

29. Dispositif selon l'une quelconque des revendications 26 à 28, **caractérisé en ce que** le circuit (8) pour fluide de perçage comporte un dispositif de filtrage avec un filtre grossier (15) et/ou un filtre fin (16) pour le fluide de perçage (9).

30. Dispositif selon l'une quelconque des revendications 27 à 29, **caractérisé en ce qu'**au moins la conduite d'admission (18) et/ou la conduite pulsée (25) du circuit (8) pour fluide de perçage sont constituées par des conduites (106) avec une stabilité élevée par rapport à une dilatation radiale et une dilatation longitudinale.

31. Dispositif selon l'une quelconque des revendications 26 à 30, **caractérisé en ce que** le circuit (8) pour fluide de perçage est conçu pour une pression du fluide de perçage (9) avec une valeur choisie dans une plage allant jusqu'à 60 bars maximum.

32. Dispositif selon la revendication 31, **caractérisé en ce que** le circuit (8) pour fluide de perçage est conçu pour une pression du fluide de perçage (9) avec une valeur choisie dans une plage allant jusqu'à 160 bars maximum.

33. Dispositif selon la revendication 31, **caractérisé en ce que** le circuit (8) pour fluide de perçage est conçu pour une pression du fluide de perçage (9) avec une valeur choisie dans une plage allant jusqu'à 300 bars maximum.

34. Dispositif selon la revendication 31, **caractérisé en ce que** le circuit (8) pour fluide de perçage est conçu pour une pression du fluide de perçage (9) avec une valeur choisie dans une plage allant jusqu'à 600 bars maximum.

35. Dispositif selon la revendication 31, **caractérisé en ce que** le circuit (8) pour fluide de perçage est conçu pour une pression du fluide de perçage (9) avec une valeur choisie dans une plage allant jusqu'à 4 000 bars maximum.

36. Dispositif selon la revendication 31, **caractérisé en ce que** le circuit (8) pour fluide de perçage est conçu pour une pression du fluide de perçage (9) avec une valeur choisie dans une plage supérieure à 4 000 bars.

37. Dispositif selon l'une quelconque des revendications 26 à 36, **caractérisé en ce que** ledit dispositif comporte un transducteur de rotation (28) pour mesurer la vitesse de rotation ou la vitesse angulaire du foret (4) et la position momentanée d'un tranchant (52) du foret (4).

38. Dispositif selon l'une quelconque des revendications 26 à 37, **caractérisé en ce qu'**un dispositif de mesure (30) est réalisé pour mesurer le tracé longitudinal dans l'espace de la forure (2).

39. Dispositif selon les revendications 37 et 38, **caractérisé en ce qu'**il est réalisé un dispositif de commande (29) qui est relié au transducteur de rotation (28), au dispositif de mesure (30) et à la valve (26).

40. Dispositif selon l'une quelconque des revendications 26 à 39, **caractérisé en ce que** le dispositif de mesure (30) comporte un porte-tête de mesure (34) pour faire varier la position dans l'espace et l'orientation d'une tête de mesure (31).

41. Dispositif selon la revendication 40, **caractérisé en ce que** le dispositif de mesure (30) comporte un dispositif de mesure de position, destiné à mesurer la position dans l'espace du porte-tête de mesure ou de la tête de mesure (31).

42. Dispositif selon la revendication 40 ou 41, **caractérisé en ce que** sur le porte-tête de mesure sont disposés au moins un émetteur d'ultrasons (36) et au moins un récepteur d'ultrasons (37).

43. Dispositif selon la revendication 42, **caractérisé en ce que** l'émetteur d'ultrasons (36) et le récepteur d'ultrasons (37) sont agencés dans une tête de mesure d'ultrasons commune.

44. Dispositif selon l'une quelconque des revendications 40 à 41, **caractérisé en ce que** sur le porte-tête de mesure (34) est disposé un détecteur de rayons (108) destiné à mesurer le rayonnement électromagnétique, et un élément (110), émettant un rayonnement électromagnétique, est disposé dans la tête de perçage (5).

45. Dispositif selon la revendication 44, **caractérisé en ce que** le détecteur de rayons (108) est conçu au moins pour mesurer l'intensité du rayonnement gamma et l'élément (110) est constitué par un élément chimique émettant une partie d'un rayonnement gamma.

46. Dispositif selon l'une quelconque des revendications 26 à 45, **caractérisé en ce que** ledit dispositif comporte un tube de guidage du perçage (91) avec un guide de perçage (94) et une tige de guide de perçage (93), un trou de guidage du foret (95) excentré étant réalisé dans le guide de perçage (94).

47. Dispositif selon la revendication 46, **caractérisé en ce que** le trou de guidage du foret (95) est orienté en oblique par rapport à un axe médian longitudinal (96) du guide de perçage (94).

48. Dispositif selon la revendication 46 ou 47, **caractérisé en ce qu'**un axe (97) du trou de guidage du foret (95) et l'axe médian longitudinal (96) du guide de perçage (94) forment un angle d'inclinaison (79) dont la valeur est choisie dans une plage entre 0° et 5°.

49. Dispositif selon la revendication 48, **caractérisé en ce que** l'angle d'inclinaison (79) formé entre l'axe (97) du trou de guidage du foret (95) et l'axe médian longitudinal (96) du guide de perçage (94) est choisi dans une plage entre 0,5° et 1,5°.

50. Dispositif permettant de percer une forure (2) dans une pièce (3) avec un diamètre D (51) d'un foret (4) et une profondeur (35) de la forure (2), le rapport entre la profondeur (35) et le diamètre D (51) étant supérieur à 100, comportant une broche de perçage (7) et comportant un foret (4) constitué par une tête de perçage (5), une tige de foret (6) et un canal (12) pour l'admission d'un fluide de perçage (9), et comportant un circuit (8) pour le fluide de perçage (9), ledit circuit (8) étant muni d'au moins une pompe (11) et d'une conduite d'admission (18), et comportant un dispositif de transmission de rotation (17) à la broche de perçage (7) pour acheminer le fluide de perçage (9) dans le canal (12) du foret (4), **caractérisé en ce que** ledit dispositif (1) comporte un foret (4) selon l'une des revendications 24 ou 25.

51. Dispositif selon la revendication 50, **caractérisé en ce que** ledit dispositif comporte un transducteur de rotation (28) pour mesurer la vitesse de rotation ou la vitesse angulaire du foret (4) et la position momentanée d'un tranchant (52) du foret (4).

52. Dispositif selon la revendication 50 ou 51, **caractérisé en ce qu'**un dispositif de mesure (30) est réalisé pour mesurer le tracé longitudinal dans l'espace de la forure (2).

53. Dispositif selon les revendications 51 et 52, **caractérisé en ce qu'**il est réalisé un dispositif de commande (29) qui est relié au transducteur de rotation (28) et au dispositif de mesure (30).

54. Dispositif selon l'une quelconque des revendications 50 à 53, **caractérisé en ce que** le dispositif de mesure (30) comporte un porte-tête de mesure (34) pour faire varier la position dans l'espace et l'orientation d'une tête de mesure (31).

55. Dispositif selon la revendication 54, **caractérisé en ce que** le dispositif de mesure (30) comporte un dispositif de mesure de position, destiné à mesurer la position dans l'espace du porte-tête de mesure (34) ou de la tête de mesure (31).

56. Dispositif selon la revendication 54 ou 55, **caractérisé en ce que** sur le porte-tête de mesure (34) sont disposés au moins un émetteur d'ultrasons (36) et au moins un récepteur d'ultrasons (37).

57. Dispositif selon la revendication 56, **caractérisé en ce que** l'émetteur d'ultrasons (36) et le récepteur d'ultrasons (37) sont agencés dans une tête de mesure d'ultrasons commune.

58. Dispositif selon la revendication 54 ou 55, **caractérisé en ce que** sur le porte-tête de mesure (34) est disposé un détecteur de rayons (108) destiné à mesurer le rayonnement électromagnétique, et un élément (110), émettant un rayonnement électromagnétique, est disposé dans la tête de perçage (5).

59. Dispositif selon la revendication 58, **caractérisé en ce que** le détecteur de rayons (108) est conçu au moins pour mesurer l'intensité du rayonnement gamma et l'élément (110) est constitué par un élément chimique émettant une partie d'un rayonnement gamma.

60. Dispositif selon l'une quelconque des revendications 50 à 59, **caractérisé en ce que** ledit dispositif comporte un tube de guidage du perçage (91) avec un guide de perçage (94) et une tige de guide de perçage (93), un trou de guidage du foret (95) excentré étant réalisé dans le guide de perçage (94).

61. Dispositif selon l'une quelconque des revendications 50 à 60, **caractérisé en ce que** le trou de guidage du foret (95) est orienté en oblique par rapport à un axe médian longitudinal (96) du guide de perçage (94).

62. Dispositif selon l'une quelconque des revendications 50 à 61, **caractérisé en ce qu'**un axe (97) du trou de guidage du foret (95) et l'axe médian longitudinal (96) du guide de perçage (94) forment un angle d'inclinaison (79) dont la valeur est choisie dans une plage entre 0° et 5°.

63. Dispositif selon l'une quelconque des revendications 50 à 62, **caractérisé en ce que** l'angle d'inclinaison (79) formé entre l'axe (97) du trou de guidage du foret (95) et l'axe médian longitudinal (96) du guide de perçage (94) est choisi dans une plage entre 0,5° et 1,5°.
